# EUROPÄISCHE PATENTSCHRIFT

(11) **EP 2 156 980 B1**
(45) Veröffentlichungstag und Bekanntmachung des Hinweises auf die Patenterteilung: **29.06.2011**
(21) Anmeldenummer: 09168062.9
(22) Anmeldetag: 18.08.2009
(51) Int. Cl.: B60P 1/16, B60P 1/28, B60P 1/04, G05D 1/00

(54) **Kipperfernsteuerung**
Tipper remote control
Télécommande à basculement

(30) Priorität: 18.08.2008 DE 102008038176
(43) Veröffentlichungstag der Anmeldung: 24.02.2010
(73) Patentinhaber: Franz Xaver Meiller Fahrzeug- und Maschinenfabrik-GmbH & Co KG, 80997 München (DE)
(72) Erfinder: Meißner, Uwe, 85560 Ebersberg (DE)
(74) Vertreter: Tiesmeyer, Johannes

(56) Entgegenhaltungen:
- EP-A1- 1 097 838
- DE-A1- 10 346 888
- JP-A- 10 297 349
- JP-A- 58 012 844
- JP-A- 58 180 332

## Beschreibung

Die vorliegende Erfindung betrifft ein tragbares Bedienungsgerät für eine Steuervorrichtung zur Steuerung einer Kippvorrichtung eines Kipperfahrzeugs.

Bei Kipperfahrzeugen, insbesondere Hinterkippem, Dreiseitenkippern, Abrollkippern oder Absetzkippern, ist es üblich, die Kippvorrichtung über hydraulisch betätigte Zylinder zu bewegen. Dabei wird gemäß dem Stand der Technik die Hydraulik zumeist über ein fest in der Fahrerkabine des Kipperfahrzeugs eingebautes Bedienungsgerät gesteuert. Z.B.: JP 10297349.

Die Nachteile eines solchen Bedienungsgeräts bestehen zum einen darin, dass das Bedienungsgerät zusätzlichen Bauraum in der zumeist engen Fahrerkabine benötigt, und dass sich eine Bedienungsperson zum Bedienen des Bedienungsgeräts in der Fahrerkabine befinden muss, während es in vielen Fällen vorteilhaft ist, dass die Bedienungsperson, welche die Bewegung der Kippvorrichtung steuert, sich zur besseren Beobachtung des Kippvorgangs außerhalb des Fahrzeugs befindet.

Weiterhin sind zweckmäßigerweise zur Steuerung des Kippvorgangs einer Kippvorrichtung mehrere Steuerfunktionen ansteuerbar, so das Kippen der Kippvorrichtung aus einer Ausgangsposition in eine Endposition, das Absenken der Kippvorrichtung aus einer Endposition in eine Ausgangsposition sowie ggf. eine oder verschiedene Sonderfunktionen, insbesondere eine Eilgangfunktion, bei der die Kippvorrichtung automatisch gesteuert in eine End- oder eine Ausgangsposition bewegt wird.

Schließlich ist die Betriebssicherheit ein wichtiger Gesichtspunkt bei der Steuerung einer Kippvorrichtung eines Kipperfahrzeugs, da beim Kippvorgang üblicherweise sehr hohe Lasten bewegt werden. Ein Bedienungsgerät ist daher derart zu gestalten, dass eine unbeabsichtigte Steuerung der Kippvorrichtung mit hoher Zuverlässigkeit vermieden wird.

Daher besteht die Aufgabe der vorliegenden Erfindung darin, ein tragbares Bedienungsgerät für eine Steuervorrichtung zur Steuerung einer Kippvorrichtung eines Kipperfahrzeugs bereitzustellen, welches es im Vergleich zum Stand der Technik mit einfacheren Mitteln und unter Berücksichtigung der Betriebssicherheit ermöglicht, mehrere Steuerfunktionen zur Steuerung der Kippvorrichtung anzusteuern.

Zur Lösung dieser Aufgabe wird erfindungsgemäß ein tragbares Bedienungsgerät für eine Steuervorrichtung zur Steuerung einer Kippvorrichtung eines Kipperfahrzeugs vorgeschlagen, welches ein aus einer Neutralstellung heraus innerhalb von wenigstens zwei aufeinander abfolgend angeordneten und aneinander anschließenden Auslenkbereichen auslenkbares Betätigungselement und eine Rückstellfederanordnung umfasst, wobei jedem Auslenkbereich eine Rückstellcharakteristik zugeordnet ist, und das Betätigungselement innerhalb eines Auslenkbereichs gegen eine gemäß der dem Auslenkbereich zugeordneten Rückstellcharakteristik zur Neutralstellung wirkende Rückstellkraft der Rückstellfederanordnung auslenkbar ist, wobei das Bedienungsgerät weiterhin einen Auslenkungssensor umfasst, der dazu eingerichtet ist, die Auslenkung des Betätigungselements zu erfassen und ein vom Maß der Auslenkung abhängiges Signal bereitzustellen, eine Signalabgabeeinrichtung umfasst, die dazu eingerichtet ist, das Sensorsignal oder/und ein aus dem Sensorsignal abgeleitetes Ausgabesignal an eine externe Steuervorrichtung zur Steuerung der Kippvorrichtung des Kipperfahrzeugs weiterzuleiten, und ein Gehäuse umfasst, das dazu eingerichtet ist, das Betätigungselement, die Rückstellfederanordnung, den Auslenkungssensor und die Signalabgabeeinrichtung aufzunehmen.

Ein solches erfindungsgemäßes Bedienungsgerät ermöglicht es, die Kippvorrichtung von außerhalb der Fahrerkabine durch die Auslenkung des Betätigungselements zu steuern. Die Rückstellkraft der Rückstellfederanordnung, die in einem gegebenen Auslenkbereich gemäß der dem Auslenkbereich zugeordneten Rückstellcharakteristik zur Neutralstellung hinwirkt, sorgt insbesondere dafür, dass das Betätigungselement automatisch in die Neutralstellung zurückkehrt, wenn es nicht von einer Bedienungsperson ausgelenkt wird. Auf diese Weise lässt sich mit einfachen Mitteln eine unabsichtliche Ansteuerung der Kippvorrichtung verhindern.

In vielen Fällen sollen bei einer Steuerung der Kippvorrichtung Bewegungen der Kippvorrichtung angesteuert werden, die in zwei einander entgegengesetzten Richtungen verlaufen, insbesondere ein Kippen aus einer Ausgangsin eine Endposition sowie ein Kippen von einer End- in eine Ausgangsposition. Daher ist gemäß einer bevorzugten Weiterbildung der vorliegenden Erfindung das Betätigungselement in zwei einander entgegengesetzten Auslenkrichtungen jeweils innerhalb von wenigstens zwei aufeinander abfolgend angeordneten und aneinander anschließenden Auslenkbereichen gegen die gemäß der dem jeweiligen Auslenkbereich zugeordneten Rückstellcharakteristik wirkende Rückstellkraft der Rückstellfederanordnung aus der Neutralstellung auslenkbar.

Grundsätzlich ist es möglich, dass die Auslenkbereiche für die zwei Auslenkrichtungen bezüglich der Neutralstellung hinsichtlich ihrer Ausdehnung oder/und der den Auslenkbereichen zugeordneten Rückstellcharakteristiken asymmetrisch angeordnet sind. Bevorzugt ist jedoch eine symmetrische Anordnung der Auslenkbereiche für die beiden Richtungen bezüglich der Neutralstellung.

Vorzugsweise kann das Betätigungselement durch Drehung um eine Rotationsachse auslenkbar sein, was eine einfache Lagerung des Betätigungselements im Gehäuse und eine besonders einfache Bedienung des Betätigungselements ermöglicht.

Insbesondere, wenn das Bedienungsgerät sowohl von Links- als auch von Rechtshändern benutzt werden soll, kann es sinnvoll sein, dass das Betätigungselement zwei Betätigungselemerit-Teile umfasst, wobei das Betätigungselement durch Drehung jedes der zwei Betätigungselement-Teile um jeweils eine Rotationsachse auslenkbar ist, und wobei das Bedienungsgerät eine Koppeleinrichtung aufweist, welche die beiden Betätigungselement-Teile derart koppelt, dass eine Drehung eines Betätigungselement-Teils in eine Drehrichtung um einen gegebenen Drehwinkelbetrag eine Drehung des jeweils anderen Betätigungselement-Teils in die entgegengesetzte Drehrichtung um diesen Drehwinkelbetrag bewirkt.

Diese zweiteilige Ausführung des Betätigungselements ist insbesondere dann sinnvoll, wenn das Bedienungsgerät in der rechten bzw. linken Hand gehalten, und das Betätigungselement durch Drehung um eine im Wesentlichen senkrecht zur Handfläche dieser Hand verlaufende Rotationsachse mit dem Daumen dieser Hand ausgelenkt werden soll. In diesem Fall würde bei einem einteilig ausgebildeten Betätigungselement durch eine Bewegung des Daumens auf die Handfläche zu das Betätigungselement für Rechtshänder im Uhrzeigersinn und für Linkshänder gegen den Uhrzeigersinn gedreht. Die beschriebene zweiteilige Ausbildung des Betätigungselements und die Kopplung der beiden Betätigungselement-Teile in der Art, dass eine Drehung eines Betätigungselement-Teils in eine Drehrichtung eine Drehung des jeweils anderen Betätigungselements in die entgegengesetzte Drehrichtung bewirkt, ermöglicht es, dass sowohl für Links- als auch für Rechtshänder die gleiche Bewegung des Daumens am Betätigungselement zum gleichen Ergebnis hinsichtlich der Ansteuerung der Kippvorrichtung führt.

Da sich bei einem solchen zweiteiligen Betätigungselement die beiden Betätigungselement-Teile bei einer Auslenkung des Betätigungselements stets in entgegengesetzten Drehrichtungen drehen, soll im folgenden bei einem solchen Betätigungselement unter der Auslenkrichtung stets die Drehrichtung eines der beiden Betätigungselement-Teile verstanden werden. Eine Auslenkung des Betätigungselements in die erste Auslenkrichtung entspricht also z.B. einer Drehung des ersten Betätigungselement-Teils im Uhrzeigersinn und einer Drehung des zweiten Betätigungselement-Teils gegen den Uhrzeigersinn. Eine Auslenkung des Betätigungselements in die zweite Auslenkrichtung entspricht dann einer Drehung des ersten Betätigungselement-Teils gegen den Uhrzeigersinn und einer Drehung des zweiten Betätigungselement-Teils im Uhrzeigersinn.

Auf besonders einfache Weise kann eine Kopplung der Betätigungselement-Teile durch eine Koppelstange realisiert werden, welche die beiden Betätigungselement-Teile in der oben beschriebenen Art aneinander koppelt.

Grundsätzlich ist es möglich, als Auslenkungssensor beispielsweise einen inkrementellen Längen- bzw. Winkelgeber bei der Verwendung eines durch lineare Bewegung bzw. durch Rotation auslenkbaren Betätigungselementes einzusetzen. Auch der Einsatz konventioneller Potentiometer als Auslenkungssensor ist möglich. Besonders bevorzugt umfasst das Betätigungselement jedoch ein magnetisches, vorzugsweise ferromagnetisches Material, und der Auslenkungssensor ist ein Magnetfeldsensor, vorzugsweise ein Hallsensor. Dies gestattet eine besonders genaue und unkomplizierte Erfassung der Auslenkung des Betätigungselementes. Bei einer zweiteiligen Ausbildung des Betätigungselements mit Kopplung der Betätigungselement-Teile in der oben beschriebenen Art ist es zweckmäßig, wenn der Auslenkungssensor die Auslenkung genau eines Betätigungselement-Teils erfasst.

Das erfindungsgemäße Bedienungsgerät kommt in den meisten Fällen auf Baustellen zum Einsatz, weswegen ein Schutz der im Bedienungsgerät integrierten Elektronik gegen Staub, Schmutz, Wasser u. Ä., womit das Bedienungsgerät in einer solchen Umgebung unweigerlich in Kontakt kommt, erforderlich ist. Daher umfasst das Bedienungsgerät gemäß einer bevorzugten Weiterbildung der vorliegenden Erfindung wenigstens zwei voneinander räumlich getrennte und gegeneinander abgedichtete, vorzugsweise wasserdicht gegeneinander abgedichtete Kammern, wobei das Betätigungselement in der einen Kammer aufgenommen ist, und der Auslenkungssensor oder/und die Signalabgabeeinrichtung in der anderen Kammer der wenigstens zwei Kammern aufgenommen sind. Auf diese Weise lässt sich das Betätigungselement, welches durch die Betätigung mit hoher Wahrscheinlichkeit in Kontakt mit der Umgebung kommen kann, derart von den empfindlichen elektronischen Komponenten des Bedienungsgeräts trennen, dass eine Beschädigung der Elektronik durch Verunreinigung weitgehend ausgeschlossen werden kann.

Das Betätigungselement kann derart auslenkbar in dem Gehäuse aufgenommen sein, dass es wenigstens mit einem Abschnitt aus dem Gehäuse heraussteht, wobei Formen und Abmessungen des Gehäuses und des Betätigungselementes so gewählt sind, dass das Bedienungsgerät von einer Bedienungsperson in einer Hand haltbar und während des Haltens in der einen Hand mit dem Daumen dieser Hand durch Auslenken des Betätigungselementes bedienbar ist. Eine solche Ausführungsform ermöglicht eine besonders einfache Bedienbarkeit des Betätigungselementes und erlaubt es der Bedienungsperson insbesondere, sich bei der Bedienung des Bedienungsgeräts auf die Beobachtung der Kippvorrichtung und eine Überwachung der angesteuerten Vorgänge zu konzentrieren.

Um zu verhindern, dass das Betätigungselement durch unabsichtliche Einwirkung auf den wenigstens einen von außerhalb des Gehäuses zugänglichen Abschnitt ausgelenkt wird, etwa wenn das Gehäuse versehentlich herunterfällt, kann das Gehäuse eine das Gehäuse vollständig umhüllende Hüllkontur definieren, wobei der wenigstens eine Abschnitt des Betätigungselements, der von außerhalb des Gehäuses zugänglich ist, sich vollständig innerhalb dieser Gehäusehüllkontur befindet. Dabei ist mit dem Begriff der Gehäusehüllkontur eine lediglich gedachte Kontur gemeint, welche das Gehäuse von außen umgibt. Der Querschnitt der Hüllkontur in einer gegebenen Querschnittsebene des Gehäuses entspricht dem Verlauf eines flexiblen Elementes, etwa eines Seils, welches in dieser Querschnittsebene um das Gehäuse gespannt ist.

Es kann daran gedacht sein, dass das Gehäuse zumindest näherungsweise die Form eines sich längs einer Gehäuselängsachse erstreckenden Quaders mit zwei Breitseiten und zwei Schmalseiten aufweist, wobei das Betätigungselement im Wesentlichen die Form eines Drehrads aufweist, welches um eine in Bezug auf das Gehäuse ortsfeste, im Wesentlichen senkrecht zu den Breitseiten des Gehäuses verlaufende Rotationsachse derart drehbar in dem Gehäuse aufgenommen ist, dass auf beiden Schmalseiten des Gehäuses jeweils wenigstens ein Umfangsabschnitt des Drehrads durch Betätigungsöffnungen im Gehäuse von außen zugänglich ist.
Eine derartige Gestaltung des Bedienungsgeräts ermöglicht es sowohl Rechts- wie auch Linkshändern, das Bedienungsgerät in der jeweils bevorzugten Hand zu halten und das Betätigungselement dabei mit dem Daumen dieser Hand auszulenken. Bezüglich der Form des Gehäuses ist festzuhalten, dass hier natürlich zahlreiche Abwandlungen von der Grundform des Quaders möglich sind, so zum Beispiel Abrundungen, eine ergonomische Gestaltung des Bereichs, in dem das Gehäuse mit der Hand gehalten wird, Ausbuchtungen in dem Gehäuse um bestimmte Elemente des Bedienungsgerätes besser aufnehmen zu können und Ähnliches.

Wie oben erläutert kann für ein derartiges Bedienungsgerät, welches sowohl von Links- als auch von Rechtshändern benutzt werden soll, eine zweiteilige Ausbildung des Betätigungselements sinnvoll sein. Daher kann daran gedacht sein, dass das Gehäuse zumindest näherungsweise die Form eines sich längs einer Gehäuselängsachse erstreckenden Quaders mit zwei Breit- und zwei Schmalseiten aufweist, wobei die zwei Betätigungselement-Teile jeweils um eine in Bezug auf das Gehäuse ortsfeste, im Wesentlichen senkrecht zu den Breitseiten des Gehäuses verlaufende Rotationsachse derart drehbar in dem Gehäuse aufgenommen sind, dass auf einer der zwei Schmalseiten wenigstens ein Umfangsabschnitt eines Betätigungselement-Teiles und auf der anderen Schmalseite wenigstens ein Umfangsabschnitt des jeweils anderen Betätigungselement-Teiles durch Betätigungsöffnungen im Gehäuse von außerhalb des Gehäuses zugänglich ist.

Gemäß einer vorteilhaften Weiterbildung der vorliegenden Erfindung ist das Betätigungselement durch Drehung des Betätigungselements oder eines der Betätigungselement-Teile um eine Rotationsachse auslenkbar und weist einen sich im Wesentliche parallel zur Rotationsachse erstreckenden Mitnehmer auf, welcher sich bei der Neutralstellung des Betätigungselements in einer Neutralposition befindet und bei Auslenkung des Betätigungselements aus der Neutralstellung mit der Rückstellfederanordnung zusammenwirkt. Durch einen solchen Mitnehmer lässt sich auf besonders einfache Weise eine Wechselwirkung zwischen dem Betätigungselement und der Rückstellfederanordnung realisieren.

Bei einer zweiteiligen Ausbildung des Betätigungselementes mit einer wie oben beschriebenen Kopplung zwischen den beiden Betätigungselement-Teilen kann ein solcher Mitnehmer an beiden Betätigungselement-Teilen vorgesehen sein, es reicht jedoch aus, wenn ein solcher Mitnehmer an einem der beiden Betätigungselement-Teile vorgesehen ist.

Nach einer bevorzugten Weiterbildung der vorliegenden Erfindung umfasst die Rückstellfederanordnung wenigstens zwei Schenkelfedern mit jeweils einer Torsionsachse und jeweils einem ersten und einem zweiten Schenkel sowie eine Anschlagsanordnung mit wenigstens einem ortsfest am Gehäuse vorgesehenen Anschlagselement, wobei für jede der Schenkelfedern die Torsionsachse im Wesentlichen mit der Rotationsachse des Betätigungselements oder des Betätigungselement-Teils übereinstimmt und die jeweils zwei Schenkel sich im Wesentlichen radial von der Rotationsachse weg erstrecken. Dabei ist für jede der Schenkelfedern der jeweilige erste Schenkel genau einem Auslenkbereich der ersten Auslenkrichtung und der jeweilige zweite Schenkel genau einem Auslenkbereich der zweiten Auslenkrichtung zugeordnet wobei die Schenkelfedern derart angeordnet sind, dass in einer Neutralstellung des Betätigungselements für jede der zwei Auslenkrichtungen die Abfolge der Schenkel in Umfangsrichtung um die Rotationsachse ausgehend von der Neutralposition des Mitnehmers der Abfolge der Auslenkbereiche entspricht, die den Schenkeln zugeordnet sind. Dabei liegt in einer Neutralstellung des Betätigungselements jeder Schenkel einer Schenkelfeder mit einer auf den Mitnehmer in seiner Neutralposition hinweisenden Seite an einem Anschlagselement der Anschlagsanordnung an, wobei bei einer Auslenkung des Betätigungselements in einem gegebenen Auslenkbereich der Mitnehmer den Schenkel oder die Schenkel auslenkt, welchem oder welchen der gegebene Auslenkbereich zugeordnet ist, sowie die Schenkel auslenkt, welchen solche Auslenkbereiche zugeordnet sind, die in der Abfolge vor dem gegebenen Auslenkbereich liegen.

Mit Hilfe der gerade beschriebenen Rückstellfederanordnung lassen sich auf einfache Weise und mit großem Gestaltungsspielraum Auslenkbereiche anordnen, in denen das Betätigungselement gegen die Rückstellkraft gemäß verschiedener, durch die Anordnung der Schenkelfedern bestimmter Rückstellcharakteristiken ausgelenkt wird. In jedem Auslenkbereich ist die wirkende Rückstellkraft nach dem Hooke'schen Gesetz näherungsweise proportional zum Auslenkwinkel, wobei die Proportionalitätskonstante von den Federkonstanten der in diesem Bereich ausgelenkten Federschenkel abhängt.

Beim Übergang von einem Auslenkbereich zu einem diesem Auslenkbereich benachbarten Auslenkbereich kommt es aufgrund des zusätzlich ausgelenkten Federschenkels oder der Federschenkel zu einer sprunghaften Änderungen im Steigungsverhalten der Rückstellkraft als Funktion der Auslenkung. Diese Änderung ist für eine Bedienungsperson deutlich an der Kraft zu erkennen, die sie gegen die Rückstellkraft zur Auslenkung des Betätigungselementes aufwenden muss. Auf diese Weise erhält die Bedienungsperson automatisch die Rückmeldung, dass ein neuer Auslenkbereich erreicht ist.

Eine sprunghafte Änderung nicht nur des Steigungsverhaltens der Rückstellkraft als Funktion der Auslenkung sondern auch der Rückstellkraft selbst und damit eine noch deutlichere Rückmeldung an die Bedienungsperson lässt sich dadurch erreichen, dass z.B. durch eine geeignete Anschlagsanordnung, eine oder mehrere Federn bei einer Neutralstellung des Betätigungselements bereits vorgespannt sind.

Grundsätzlich ist eine Vielzahl von unterschiedlichen Anordnungen der Auslenkbereiche hinsichtlich ihrer Ausdehnung und der wirkenden Federkonstante möglich. So ist wiederum sowohl ein symmetrischer als auch ein asymmetrischer Aufbau der Anordnung bezüglich der Neutralstellung des Betätigungselementes denkbar. Weiterhin ist vorstellbar, dass mehrere Schenkel dem gleichen Auslenkbereich zugeordnet sind, es ist jedoch auch eine 1:1-Zuordnung zwischen Schenkel und Auslenkbereich möglich.

Die Existenz unterschiedlicher Auslenkbereiche ermöglicht es, dass nach einer bevorzugten Weiterbildung der vorliegenden Erfindung die Auslenkung des Betätigungselements in unterschiedlichen Auslenkbereichen unterschiedlichen Steuerfunktionen der Steuervorrichtung zugeordnet ist. Wie oben beschrieben, erkennt eine Bedienungsperson bei der Auslenkung des Betätigungselementes durch die Veränderung im Rückstellkraft-Verhalten, wenn ein neuer Auslenkbereich erreicht ist. Auf diese Weise erhält die Bedienungsperson bei einem gerade beschriebenen Bedienungsgerät bei der Auslenkung des Betätigungselementes ein Signal, wenn bei einer weiteren Auslenkung eine neue Steuerfunktion der Steuervorrichtung angesteuert wird. Auf diese Weise kann ein unabsichtliches Wechseln zwischen verschiedenen Steuerfunktionen vermieden werden.

Weiterhin kann vorgesehen sein, dass wenigstens ein Auslenkbereich wenigstens zwei Teilbereiche umfasst, und dass die Auslenkung des Betätigungselementes in unterschiedlichen Teilbereichen des wenigstens einen Auslenkbereichs unterschiedlichen Steuerfunktionen der Steuervorrichtung zugeordnet ist. Dies ist insbesondere zweckmäßig, wenn die Bedienungsperson nicht über den Wechsel zwischen unterschiedlichen Steuerfunktionen informiert werden muss, so zum Beispiel, wenn in einem gewissen Teilbereich zusätzliche Steuerfunktionen, etwa die Ausgabe eines optischen oder akustischen Warnsignals, unabhängig von einem Eingriff der Bedienungsperson angesteuert werden sollen.

Gemäß einer vorteilhaften Weiterbildung der vorliegenden Erfindung umfasst der erste Auslenkbereich für beide Richtungen jeweils einen näher an der Neutralstellung gelegenen ersten Teilbereich und einen sich an den ersten Teilbereich anschließenden zweiten Teilbereich, wobei im ersten Teilbereich des ersten Auslenkbereichs für beide Auslenkrichtungen jede Auslenkung des Betätigungselementes einem Halten der Kippvorrichtung in der aktuellen Position zugeordnet ist, wobei im zweiten Teilbereich des ersten Auslenkbereichs die Auslenkung des Betätigungselementes für eine erste Auslenkrichtung einer mit dem Maß der Auslenkung zunehmenden Geschwindigkeit eines Kippens der Kippvorrichtung von einer Ausgangs- in eine Endposition und für die der ersten Auslenkrichtung entgegengesetzte zweite Auslenkrichtung einer mit dem Maß der Auslenkung zunehmenden Geschwindigkeit eines Kippens der Kippvorrichtung von einer End- in eine Ausgangsposition zugeordnet ist, und wobei jede Auslenkung im zweiten Auslenkbereich für die erste Auslenkrichtung einer Endpositionssonderfunktion, insbesondere einem automatisch gesteuerten Kippen der Kippvorrichtung in die Endposition und für die zweite Auslenkrichtung eine Ausgangspositionssonderfunktion, insbesondere einem automatisch gesteuerten Kippen der Kippvorrichtung in die Ausgangsposition zugeordnet ist.

Bei einer zweiteiligen Ausbildung des Betätigungselements mit der oben beschriebenen Kopplung zwischen den Betätigungselement-Teilen ist dabei wie oben erläutert zu beachten, dass sich der Begriff der Auslenkrichtung auf die Drehrichtung eines der beiden Betätigungselement-Teile bezieht.

Das gerade beschriebene Bedienungsgerät ermöglicht in besonders einfacher Weise die Ansteuerung der wesentlichen Steuerfunktionen einer Kippvorrichtung, wobei gleichzeitig eine hohe Betriebssicherheit erreicht ist. So wird in den jeweils ersten Teilbereichen, also bei sehr kleinen Auslenkungen des Betätigungselementes die Kippvorrichtung zunächst nicht bewegt, um eine unerwünschte Betätigung bei versehentlichem Betätigen des Betätigungselementes zu verhindern. Für beide Auslenkrichtungen gibt es einen Bereich, in dem die Kippgeschwindigkeit mit der Auslenkung zunimmt, vorzugsweise proportional mit Auslenkung zunimmt, und einen Sonderfunktionsbereich, in dem vorzugsweise eine Eilgangfunktion angesteuert wird, bei welcher die Kippvorrichtung automatisch gesteuert in die Ausgangs- bzw. Endposition gebracht wird. Durch den deutlichen Kraftanstieg beim Übergang vom ersten in den zweiten Auslenkbereich für jede Richtung wird die Bedienungsperson vor einem unerwünschten Wechsel zwischen dem aktiven Steuern der Kippgeschwindigkeit und dem Einschalten der Sonderfunktion gewarnt.

Ganz allgemein ist es unabhängig von der aktuellen Funktionsbelegung des ersten Auslenkbereichs des Betätigungselements bevorzugt, dass dieser erste Auslenkbereich einen unmittelbar an die Neutralstellung anschließenden Leerlauf-Teilbereich umfasst, in welchem keine Funktion der Kippvorrichtung aktiv angesteuert wird, so dass unbeabsichtigtes Auslösen von Funktionen der Kippvorrichtung in diesem Leerlauf-Teilbereich verhindert wird.

Grundsätzlich ist es möglich, dass die Signalabgabeeinrichtung das Sensorsignal oder/und ein aus dem Sensorsignal abgeleitetes Ausgabesignal an eine externe Steuervorrichtung über eine Kabelverbindung weiterleitet. Besonders bevorzugt umfasst die Signalabgabeeinrichtung jedoch einen Funksender zur Weiterleitung des Sensorsignals oder/und eines daraus abgeleiteten Ausgabesignals an eine externe Steuervorrichtung zur Steuerung der Kippvorrichtung des Kipperfahrzeugs. Auf diese Weise ist die Bedienungsperson nicht an räumliche Beschränkungen durch ein Kabel am Bedienungsgerät gebunden und kann ihre Position innerhalb der Reichweite des Funksenders weitgehend frei wählen, zum Beispiel so, um den Kippvorgang optimal überwachen zu können.

Gemäß einer vorteilhaften Weiterbildung der vorliegenden Erfindung umfasst das Bedienungsgerät eine Umwandlungseinrichtung, vorzugsweise eine Mikroprozessoreinrichtung zur Umwandlung des Sensorsignals in ein daraus abgeleitetes Ausgabesignal, wobei die Ableitung des Ausgabesignals aus dem Sensorsignal für unterschiedliche Auslenkbereiche oder/und für unterschiedliche Teilbereiche eines Auslenkbereichs durch unterschiedliche vorgegebene Zuordnungsvorschriften erfolgt. Auf diese Weis ist es möglich, eine Vielzahl von Steuerfunktionen über das Betätigungselement des Bedienungsgeräts anzusteuern. Grundsätzlich ist es jedoch auch möglich, dass eine solche Umwandlungseinrichtung nicht im Bedienungsgerät, sondern in der externen Steuervorrichtung integriert ist.

Der Gestaltungsspielraum bezüglich der ansteuerbaren Steuerfunktionen lässt sich weiterhin erhöhen, indem das Bedienungsgerät wenigstens einen Vorwahlschalter umfasst, über den wenigstens zwei Vorwahlfunktionen auswählbar sind, wobei die Auslenkung des Betätigungselementes in einem Auslenkbereich unterschiedlichen Steuerfunktionen zugeordnet ist, wenn unterschiedliche Vorwahlfunktionen ausgewählt sind. So kann z.B. für einen Dreiseitenkipper die Seite vorgewählt werden, über die die Kippvorrichtung gekippt werden soll. Ebenso ist es für ein Kippergespann möglich, auf diese Weise zwischen einem Kippen der Kippbrücke des Zugfahrzeugs und einem Kippen der Kippbrücke des Fahrzeuganhängers zu wählen. Insgesamt ist auf diese Weise eine Ansteuerung verschiedener Steuerfunktionen mit nur einem Betätigungselement möglich. Für jede gewählte Vorwahlfunktion ist wiederum die Ansteuerung verschiedener Steuerfunktionen durch die oben beschriebene Auslenkung des Betätigungselements in unterschiedlichen Auslenkbereichen oder/und unterschiedlichen Teilbereichen eines Auslenkbereichs möglich.

Ebenso ist es durch den Einsatz eines Vorwahlschalters auf einfache Weise möglich, ein Bedienungsgerät mit einteilig ausgebildetem Betätigungselement zu erhalten, welches in der Hand gehalten und durch Drehen des Betätigungselements um eine Rotationsachse ausgelenkt werden kann, welche im Wesentlichen senkrecht zu der Handfläche dieser Hand verläuft. Dabei ist vor der Bedienung durch Drücken eines entsprechenden Vorwahlschalters auszuwählen, ob ein Rechtshänder oder ein Linkshänder das Bedienungsgerät bedient. Auf diese Weise lässt sich zum Beispiel für Rechtshänder durch eine Drehung im Uhrzeigersinn eine Kippbewegung der Kippvorrichtung von der Ausgangs- in die Enposition ansteuern, für Linkshänder lässt sich durch eine Drehung gegen den Uhrzeigersinn die gleiche Kippbewegung ansteuern, so dass sowohl für Links- als auch für Rechtshänder die gleiche Daumenbewegung die gleiche Funktion ansteuert.

Weiterhin kann vorgesehen sein, dass das Bedienungsgerät eine Anzeige umfasst, auf der während der Bedienung zu jedem Zeitpunkt die Auslenkung des Betätigungselementes oder/und das Sensorsignal oder/und das Ausgabesignal oder/und der Auslenkbereich oder/und der Teilbereich eines Auslenkbereichs, in dem sich das Betätigungselement befindet, oder/und eine ausgewählte Vorwahlfunktion angezeigt werden. Diese Information der Bedienungsperson erhöht zusätzlich die Betriebssicherheit.

Schließlich wird auch Patentschutz für ein Kipperfahrzeug mit einer Kippvorrichtung, einer Steuervorrichtung zur Steuerung der Kippvorrichtung und einem wie oben beschriebenen Bedienungsgerät für die Steuervorrichtung beansprucht.

Im Rahmen der vorliegenden Anmeldung sollen unter den Begriff Kipperfahrzeug nicht nur Standard-Hinterkipper oder Mehrseitenkipperfahrzeuge fallen, sondern u.a. zum Beispiel auch Abrollkipper- und Absetzkippertahrzeuge.

Nachfolgend wird die vorliegende Erfindung anhand mehrerer besonders bevorzugter Ausführungsbeispiele unter Bezugnahme auf die beiliegenden Figuren 1 -10 näher erläutert.
- Fig. 1: zeigt eine schematische Darstellung eines ersten Ausfüh- rungsbeispiels eines erfindungsgemäßen Bedienungsgeräts für eine Steuervorrichtung zur Steuerung einer Kippvorrich- tung eines Kipperfahrzeugs in einer Draufsicht.
- Fig. 2: zeigt einen Teil des Gehäuses des Bedienungsgeräts von Fig. 1 in einer perspektivischen Darstellung.
- Fig. 3: zeigt den Gegenstand von Fig. 2 in einer Draufsicht.
- Fig. 4: zeigt eine Vergrößerung des in Fig. 3 mit A gekennzeichne- ten Bereichs, wobei in der Darstellung von Fig. 4 im Gegen- satz zu der Darstellung in den Fig. 2 und 3 neben dem Ge- häuse auch Teile des Betätigungselements und die Rück- stellfederanordnung sichtbar sind.
- Fig. 5: zeigt einen vergrößert herausgezeichneten Zentralbereich aus Fig. 3.
- Fig. 6: zeigt eine schematische Darstellung eines zweiten Ausfüh- rungsbeispiels eines erfindungsgemäßen Bedienungsgeräts in einer Draufsicht.
- Fig. 7: zeigt eine schematische Darstellung eines dritten Ausfüh- rungsbeispiels eines erfindungsgemäßen Bedienungsgeräts in einer Draufsicht.
- Fig. 8: zeigt den Gegenstand von Fig. 7 in einer Seitenansicht.
- Fig. 9: zeigt wesentliche Bestandteile eines vierten Ausführungsbei- spiels eines erfindungsgemäßen Bedienungsgeräts in einer perspektivischen Darstellung.
- Fig. 10: zeigt wesentliche Bestandteile eines fünften Ausführungsbei- spiels eines erfindungsgemäßen Bedienungsgeräts in einer perspektivischen Darstellung.

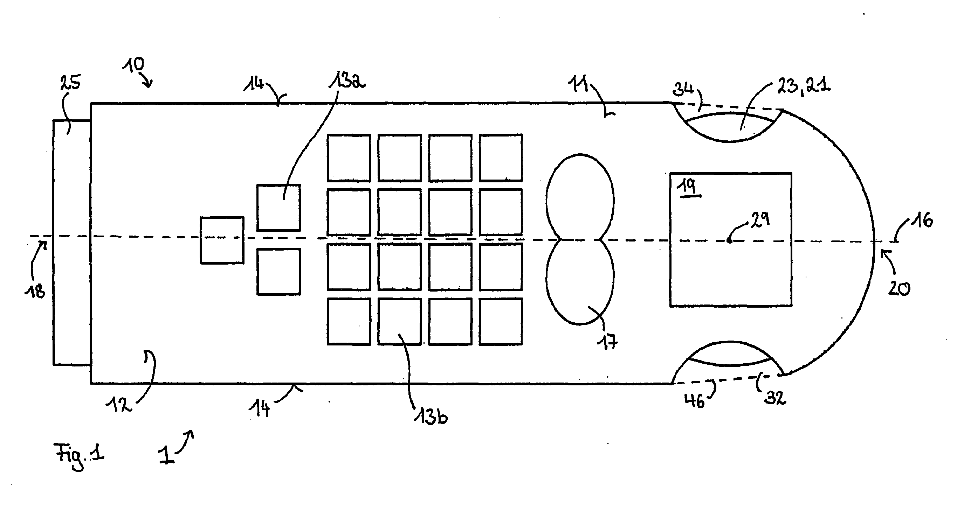

Fig. 1 zeigt eine Draufsicht auf ein erfindungsgemäßes Bedienungsgerät 1.

Das Gehäuse 10, in dem die Komponenten des Bedienungsgeräts 1 aufgenommen sind, weist zumindest näherungsweise die Form eines Quaders mit zwei Breitseiten 12 und zwei Schmalseiten 14 auf und erstreckt sich längs einer Gehäuselängsachse 16 von einem hinteren Längsende 18 zu einem vorderen Längsende 20. Im Bereich des vorderen Längsendes 20 weicht die Form des Gehäuses von der eines Quaders ab, die Grundform des Quaders ist jedoch bei Betrachtung des Gehäuses 10 noch deutlich zu erkennen.

Die dem Betrachter nähere Breitseite 12 des Gehäuses 10 ist in Form einer Deckplatte 11 ausgebildet, an der in zwei Gruppen angeordnete Tastschalter 13a, 13b, ein Kipptaster 17 sowie eine Anzeige 19 angebracht sind. Der Übersichtlichkeit halber wurde nur jeweils einer der Tastschalter 13a, 13b der beiden Gruppen mit einem Bezugszeichen versehen.

Ein Betätigungselement 21 in Form eines Drehrads 23 ist drehbar um eine senkrecht zu den Breitseiten 12 verlaufende und die Gehäuselängsachse 16 schneidende Rotationsachse 29 im Gehäuse 10 aufgenommen. Das Drehrad 23 ist an den beiden seitlichen Öffnungen 32 und 34 in den Schmalseiten 14 des Gehäuses 10 jeweils in einem Umfangsabschnitt von außen zugänglich.

Die Form des Gehäuses 10 definiert eine nur gedachte Gehäusehüllkontur 46, die in Fig. 1 durch eine gestrichelte Linie angedeutet ist. Dabei sind die Abmessungen des Gehäuses 10 und des Drehrads 23 so gewählt, dass das im Gehäuse 10 drehbar aufgenommene Drehrad 23 nicht über den Bereich der Gehäusehüllkontur 46 hinausstehen kann. Auf diese Weise wird ein unabsichtliches Bedienen des Bedienungsgeräts 1, z. B. beim Herunterfallen eines Gerätes, verhindert.

Das Bedienungsgerät 1 ist so ausgebildet, dass es von einer Bedienungsperson derart in einer Hand gehalten werden kann, dass eine der Breitseiten 12 des Gehäuses 10 in der Handfläche der Bedienungsperson ruht, und die Bedienungsperson gleichzeitig das Betätigungselement 21 durch eine der

Öffnungen 32 bzw. 34 mit dem Daumen dieser Hand betätigen kann. Dadurch, dass das hier beschriebene Gehäuse 10 zwei einander gegenüberliegende Drehradöffnungen 32 und 34 aufweist, lässt es sich gleichermaßen von Rechts- wie von Linkshändern bedienen.

Weiterhin können durch Drücken eines der Tastschalter 13a Vorwahlfunktionen ausgewählt werden, die bestimmen, welche Steuerfunktionen durch Auslenken des Drehrads 23 angesteuert werden sollen. Es ist jedoch auch möglich, dass über einige der Schalter 13a oder 13b oder 17 direkt Steuerfunktionen ansteuerbar sind.

Schließlich ist am hinteren Längsende 18 des Gehäuses 10 ein Not-Ausschalter 25 angebracht, durch dessen Betätigung die über das Bedienungsgerät 1 angesteuerte Kippvorrichtung im Notfall auf sehr einfache und schnelle Weise zum Anhalten gebracht werden kann. Es sind natürlich viele verschiedene Ausgestaltungen der einzelnen Schalter 13a, 13b, 17, insbesondere des Not-Ausschalters 25 möglich.

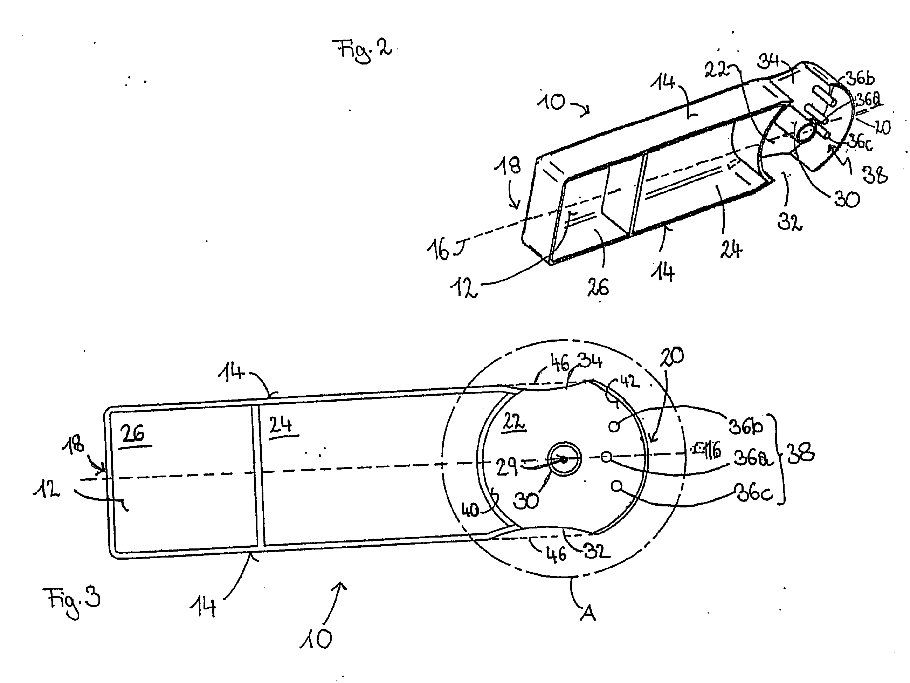

Fig. 2 zeigt einen Teil des Gehäuses 10 des Bedienungsgeräts 1 von Fig. 1 in einer perspektivischen Darstellung. Dabei wurde die Deckplatte 11 entfernt, um einen Blick in das Innere des Gehäuses 10 zu ermöglichen.

Das Innere des Gehäuses 10 ist in drei Kammern 22, 24 und 26 unterteilt. Dabei sind die Kammern 24 und 26 räumlich von der dem vorderen Längsende 20 des Gehäuses 10 am nächsten liegenden Kammer 22 getrennt. Durch Anbringen der Deckplatte 11 an der dem Betrachter zugewandten Breitseite 12 des Gehäuses 10 ist es weiterhin möglich, die Kammern 24 und 26 gegen die Kammer 22 abzudichten.

Die Kammer 22 dient zur Aufnahme des hier nicht dargestellten Drehrades 23, welches drehbar um die Rotationsachse 29 in einem fest am Gehäuse 10 in der Kammer 22 angebrachten Drehlager 30 gelagert ist.

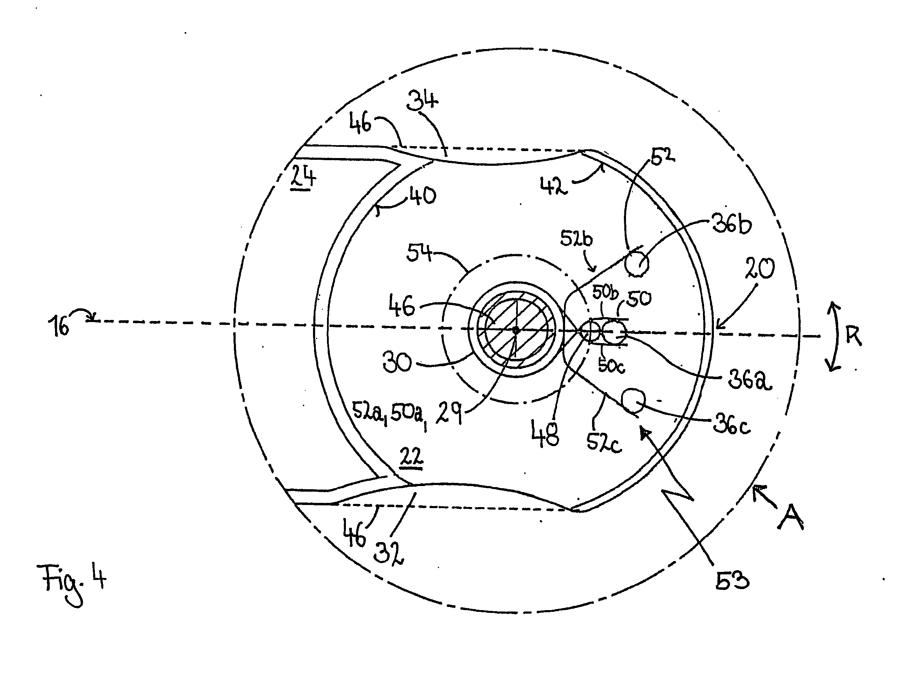

Weiterhin ist in der Kammer 22 des Gehäuses 10 eine aus drei Anschlagselementen 36a, 36b und 36c bestehende Anschlagsanordnung 38 zu erkennen. Hinsichtlich einer näheren Beschreibung der Gestalt und Funktionsweise der Anschlagsanordnung 38 wird ausdrücklich auf die folgende Beschreibung der Figuren 3 und 4 verwiesen.

In den Kammern 24 und 26 können z.B. der Auslenkungssensor oder die Signalabgabeeinrichtung aufgenommen werden. Ferner ist eine Abteilung einer Kammer z. B. der Kammer 26 zur Aufnahme von Batterien möglich. Die Trennung der Kammern 24 und 26, welche Elektronikkomponenten des Bedienungsgerätes aufnehmen, von der Kammer 22, in der das Betätigungselement 21, in diesem Fall also das Drehrad 23 aufgenommen wird, erfüllt die Aufgabe, die Elektronikkomponenten vor Verunreinigungen wie Staub oder Wasser zu schützen, welche durch die Betätigung des Drehrads 23 im Bereich der Öffnungen 32 und 34 mit hoher Wahrscheinlichkeit in Kontakt mit dem Drehrad 23 kommen.

Fig. 3 zeigt eine Draufsicht auf das in Fig. 1 dargestellte Gehäuse. In dieser Darstellung sind ebenfalls die Kammern 22, 24 und 26 sowie das in der Kammer 22 angebrachte Drehlager 30 und die Anschlagselemente 36a, 36b und 36c gut zu erkennen. Die Anschlagselemente bestehen dabei aus Stiften mit im Wesentlichen kreisförmigem Querschnitt, die näherungsweise senkrecht zu den Breitseiten 12 des Gehäuses 10 ortsfest im Gehäuse 10 angebracht sind. Das mittlere Anschlagselement 36a ist so angebracht, dass die Längsachse 16 hindurch verläuft. Die beiden äußeren Anschlagselemente 36b und 36c sind zu beiden Seiten der Längsachse angeordnet. Das mittlere Anschlagselement 36a ist mit einem geringeren Abstand zum Drehlager 30 angeordnet als die beiden äußeren Anschlagselemente 36b und 36c. Die Anordnung der drei Anschlagselemente 36 ist dabei symmetrisch zur Gehäuselängsachse 16.

Die Wirkungsweise des Betätigungselementes, der Rückstellfederanordnung und der Anschlagselemente wird im Zusammenhang mit Fig. 4 näher erläutert.

Die Seitenflächen 40 und 42 der Kammer 22 erstrecken sich im Wesentlichen senkrecht zu den Breitseiten 12 und verlaufen in einer Ebene parallel zu den Breitseiten 12 im Wesentlichen längs einer kreisförmigen Linie. Auf diese Weise kann das Drehrad 23 ohne unnötige Leerräume in der Kammer 22 aufgenommen werden, in die anderenfalls Schmutz eindringen könnte.

Fig. 4 zeigt eine Vergrößerung des in Fig. 3 mit A gekennzeichneten Bereiches. Im Gegensatz zu den Fig. 2 und 3, die lediglich einen Abschnitt des Gehäuses 10 sowie die Anschlagsanordnung 28 zeigen, sind in Fig. 4 auch Abschnitte des Drehrads 23 sowie die Schenkelfedern 50, 52 der Rückstellfederanordnung 53 zu erkennen.

Fig. 4 zeigt einen Querschnitt eines Zapfens 46, mit dem das in Fig. 4 nicht dargestellte Drehrad 23 fest verbunden und über den das Drehrad 23 drehbar in dem Drehlager 30 gelagert ist. Weiterhin ist in Fig. 3 ein Querschnitt des an dem Drehrad 23 vorgesehenen Mitnehmers 48 zu erkennen. Dieser Mitnehmer 48 verläuft im Wesentlichen parallel zur Rotationsachse 29 und steht von dem hier nicht dargestellten Drehrad 23 im Wesentlichen senkrecht ab. Er weist einen annähernd kreisförmigen Querschnitt auf und ist mit einem Abstand von der Rotationsachse 29 angeordnet.

Weiterhin ist in Fig. 4 eine erste und eine zweite Schenkelfeder 50 bzw. 52 zu erkennen, die jeweils eine Torsionsachse 50a bzw. 52a und jeweils zwei Federschenkel 50b und 50c bzw. 52b und 52c aufweist. Dabei sind die Schenkeifedern 50 und 52 derart an dem Drehlager 30 angebracht, dass ihre Torsionsachsen 50a und 52a im Wesentlichen mit der Rotationsachse 29 des Betätigungselementes 21 zusammenfallen. Die Federschenkel 50b, 50c, 52b und 52c erstrecken sich im Wesentlichen radial von der Rotationsachse 29 und senkrecht zu dieser weg.

In der in Fig. 4 dargestellten Neutralposition des Mitnehmers 48 sind beide Schenkeifedern 50 und 52 so angeordnet, dass sie achsensymmetrisch zur Gehäuselängsachse 16 verlaufen. Insbesondere verläuft die Gehäuselängsachse 16 genau durch den Mitnehmer 48 in seiner Neutralposition, während die jeweils zwei Schenkel 50b, 50c, 52b, 52c jeder Schenkelfeder 50, 52 beidseitig der Gehäuselängsachse 16 angeordnet sind. Die Federschenkel 52b, 52c, 50b und 50c liegen dabei mit der Seite, die dem Mitnehmer 48 in seiner Neutralposition zugewandt ist, an einem der Anschlagselemente 36a, 36b oder 36c an, genauer liegen der Schenkel 50b und der Schenkel 50c beide am Anschlagselement 36a an, der Federschenkel 52b liegt am Anschlagselement 36b an und der Federschenkel 52c am Anschlagselement 36c. Dabei sind die Federschenkel jeweils nur so lang, dass sie radial nur ein kleines Stück über das Anschlagselement 36a, 36b, 36c hervorstehen, an dem sie in der in Fig. 3 gezeigten Position anliegen.

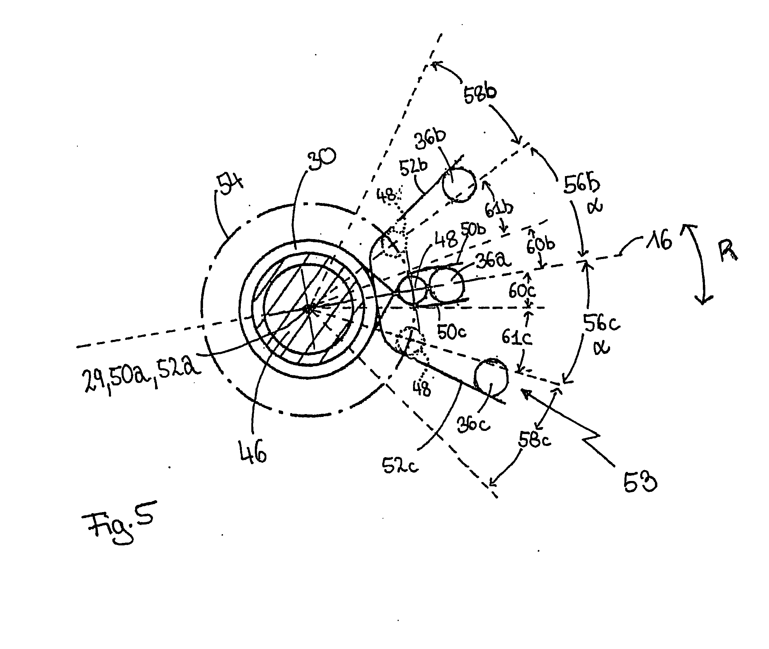

Im Folgenden soll die Funktionsweise von dem Drehrad 23 und der Rückstellfederanordnung 53 anhand von Fig. 5 näher beschrieben werden, welche einen vergrößert herausgezeichneten Zentralbereich aus Fig. 4 zeigt.

Ausgehend von der in Fig. 4 und 5 dargestellten Ausgangs- oder Neutralstellung lässt sich das Drehrad 23 in Richtung des Doppelpfeils R im oder gegen den Uhrzeigersinn um die Rotationsachse 29 drehen. Dabei bewegt sich der parallel zur Rotationsachse 29 senkrecht vom Drehrad 23 wegstehende Mitnehmer 48 entlang der in Fig. 5 strichpunktiert dargestellten Kreislinie 54.

Der Mitnehmer 48 lenkt bei einer Bewegung im Uhrzeigersinn zunächst den Federschenkel 50c aus, bei einer Bewegung gegen den Uhrzeigersinn zunächst den Federschenkel 50b. Dabei wird der jeweilige Federschenkel tätsächlich gegen die Rückstellkraft der Feder ausgelenkt und die Schenkelfeder dreht sich nicht um die Rotationsachse 29, da die Position des jeweiligen nicht unmittelbar vom Mitnehmer 48 ausgelenkten Federschenkels 50b bzw. 50c durch das Anschlagselement 36a verhindert wird. Die Rückstellkraft, die zur Auslenkung des Drehrads 23 in einem ersten Auslenkbereich 56b bzw. 56c überwunden werden muss, ist näherungsweise proportional zum Auslenkungswinkel, wobei die Proportionalitätskonstante durch die Federkonstante der ersten Schenkelfeder 50 gegeben ist.

Beim Erreichen eines bestimmten Auslenkungswinkels α greift der Mitnehmer 48 in den Federschenkel 52b bzw. 52c der zweiten Schenkelfeder 52 ein. Die Position des Mitnehmers 48 bei Erreichen dieses Auslenkungswinkels α für Auslenkungen im und gegen den Uhrzeigersinn ist in Fig. 5 jeweils durch eine gestrichelte Darstellung des Mitnehmers 48 angedeutet. Für Auslenkungen um einen Winkel größer als α muss daher der Federschenkel 50c gemeinsam mit dem Federschenkel 52c bzw. der Federschenkel 50b gemeinsam mit dem Federschenkel 52b ausgelenkt werden. Damit ergibt sich bei diesem Auslenkungswinkel α ein deutlicher Knick in der Rückstellkraft, als Funktion des Auslenkwinkels. An den ersten Auslenkbereich 56b bzw. 56c schließt sich also ein zweiter Auslenkbereich 58b bzw. 58c an, in dem die Rückstellkraft mit zunehmendem Auslenkwinkel deutlich stärker ansteigt als im ersten Auslenkbereich 56b bzw. 56c. Der Auslenkbereich 58b bzw. 58c ist in Fig. 5 nur beispielhaft angedeutet. Hier könnten z. B. weitere Anschläge vorgesehen sein, welche eine maximal mögliche Auslenkung der Schenkelfedern 52 und 50 definieren und so eine Beschädigung der Federn durch Überdehnung verhindern.

Es bleibt nachzutragen, dass die Federschenkel 50b und 50c der ersten Schenkelfeder 50 deutlich kürzer sind als die Federschenkel 52b und 52c der zweiten Schenkelfeder 52, insbesondere um ein gemeinsames Auslenken der Schenkel 50c und 52c bzw. 52b und 50b zu ermöglichen, ohne dass der Schenkel 50c am Anschlag 36c bzw. der Schenkel 50b am Anschlag 36b anstößt.

Die Auslenkung des Drehrads 23 wird von einem in den Figuren nicht dargestellten Auslenkungssensor erfasst, welcher ein von dem Maß der Auslenkung abhängiges Sensorsignal bereitstellt, das von einer Umwandlungseinrichtung in ein Ausgabesignal umgesetzt wird, welches dann von einer ebenfalls nicht dargestellten Signalabgabeeinrichtung an eine extreme Steuervorrichtung zur Steuerung der Kippvorrichtung des Kipperfahrzeugs weitergeleitet wird. Im so genannten Nullbereich, also in einem sehr kleinen Auslenkbereich um die Neutralstellung herum, in Fig. 5 durch strichlinierte Linien angedeutet und mit 60b bzw. 60c bezeichnet, wird die Kippvorrichtung in der aktuellen Position gehalten. Auf diese Weise wird eine unabsichtliche Ansteuerung der Kippvorrichtung verhindert, etwa wenn versehentlich gegen das Betätigungselement gestoßen wird.

Die Breite des Nullbereichs 60b bzw. 60c hängt dabei nicht von der Mechanik des in den Figuren 1 - 5 dargestellten Bedienungsgeräts 1 ab, sondern lässt sich weitgehend frei einstellen, etwa durch geeignete Programmierung der Umwandlungseinrichtung. Bei Auslenkungen des Betätigungselementes im zweiten Teilbereich 61 b bzw. 61 c des ersten Auslenkbereichs 56b bzw. 56c jenseits des Nullbereiches 60b bzw. 60c steuert die Auslenkung die Kippgeschwindigkeit der Kippvorrichtung, wobei die Kippvorrichtung je nach Auslenkrichtung von einer Ausgangs- in eine End- oder von einer End- in eine Ausgangsposition bewegt wird. Das Maß der Geschwindigkeit des Kippens wird dabei vom Auslenkungswinkel bestimmt, vorzugsweise ist die Kippgeschwindigkeit proportional zum Auslenkungswinkel, was ein besonders intuitives Bedienen des Bedienungsgerätes ermöglicht. Wird der Auslenkungswinkel α überschritten, also der zweite Auslenkbereich 58b bzw. 58c erreicht, so wird an der Kippvorrichtung eine Sonderfunktion, vorzugsweise ein Eilgang eingeschaltet, bei welchem die Kippvorrichtung automatisch in eine Ausgangsposition bzw. in eine Endposition bewegt wird.

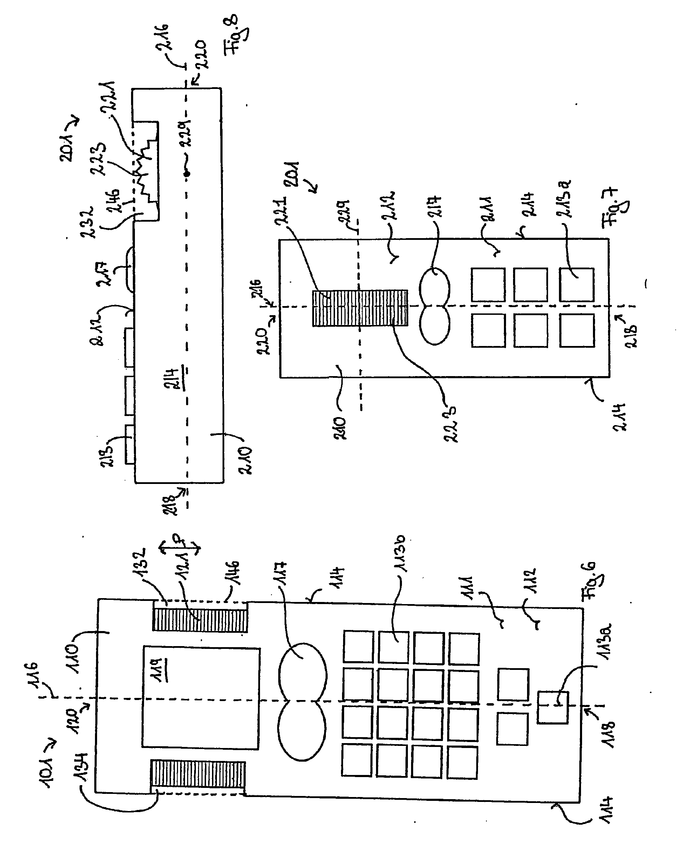

Die Fig. 6 bis 10 zeigen vier weitere Ausführungsbeispiele eines erfindungsgemäßen Bedienungsgeräts.

Bauteile, welche funktionsidentisch zu Bauteilen des ersten Ausführungsbeispiels aus den Fig. 1 bis 5 sind, wurden mit Bezugszeichen versehen, welche aus den Bezugszeichen der Fig. 1 bis 5 je nach Ausführungsbeispiel durch Addition der Zahlen 100, 200, 300 oder 400 hervorgehen. Um Wiederholungen zu vermeiden, werden die folgenden Ausführungsbeispiele nur insofern beschrieben, als sie sich von dem ersten Ausführungsbeispiel unterscheiden. Hinsichtlich der übereinstimmenden Merkmale wird ausdrücklich auf die Beschreibung des ersten Ausführungsbeispiels verwiesen, welches in den Fig. 1 bis 5 dargestellt ist.

Die Fig. 6 und 7 zeigen zwei Ausführungsbeispiele, bei welchen mit besonders einfachen Mitteln ermöglicht wird, dass sie sich sowohl von Links- als auch von Rechtshändern auf die gleiche Weise bedienen lassen.

Fig. 6 zeigt ein Bedienungsgerät 101, bei welchem das Betätigungselement 121 in Form eines längs der Gehäuselängsachse 116 in die Richtung des Doppelpfeils P verschiebbaren Schiebereglers ausgebildet ist. Die Auslenkung des Betätigungselements 121 erfolgt hier also nicht durch Drehung sondern durch eine lineare Verschiebung. Dabei ist sowohl die Rückstellfederanordnung als auch der Auslenkungssensor an diese lineare Auslenkung anzupassen. Der Auslenkungssensor kann bei dem Gerät 101 beispielsweise ein inkrementeller Längengeber sein. Die Oberfläche des Betätigungselements 121, 221 des zweiten wie des dritten Ausführungsbeispiels ist geriffelt ausgebildet, um die Handhabung des Betätigungselements zu erleichtern.

Die Fig. 7 und 8 zeigen ein drittes Ausführungsbeispiel 201 eines erfindungsgemäßen Bedienungsgeräts, bei welchem das Betätigungselement 221 in Form eines Drehrades 223 ausgebildet ist, welches jedoch im Gegensatz zum Bedienungsgerät 1 des ersten Ausführungsbeispiel derart drehbar in dem Gehäuse 210 aufgenommen ist, dass die Rotationsachse 229 des Betätigungselements 221 senkrecht den Schmalseiten 214 des Gehäuses 210 verläuft, wobei das Betätigungselement 221 durch eine Betätigungselement-Öffnung 232 auf der der Bedienungsperson zugewandten Breitseite 212 des Bedienungsgeräts 201 von außen zugänglich ist. Das Bedienungsgerät 201 lässt sich von Links- wie von Rechtshändern auf die gleiche Weise bedienen.

Für Bedienungsgeräte, bei welchen das Betätigungselement durch Drehung um eine Rotationsachse ausgelenkt wird, welche im Wesentlichen senkrecht zu einer der Breitseiten des Gerätes und damit senkrecht zur Handfläche einer das Gerät haltenden Hand verläuft, ergibt sich das Problem, dass etwa für das in den Fig. 1 bis 5 dargestellte Gerät 1 eine gleiche Daumenbewegung für Rechts- und für Linkshänder zur Drehung des Betätigungselements 21 in unterschiedlichen Drehrichtungen führt. In einem Bedienungsgerät wie es in den Fig. 1 bis 5 dargestellt ist, lässt sich eine gleiche Bedienbarkeit für Rechts- und Linkshänder durch einen geeigneten Vorwahlschalter 13a realisieren, über den vorgewählt wird, ob ein Rechts- oder Linkshänder das Gerät 1 bedient.

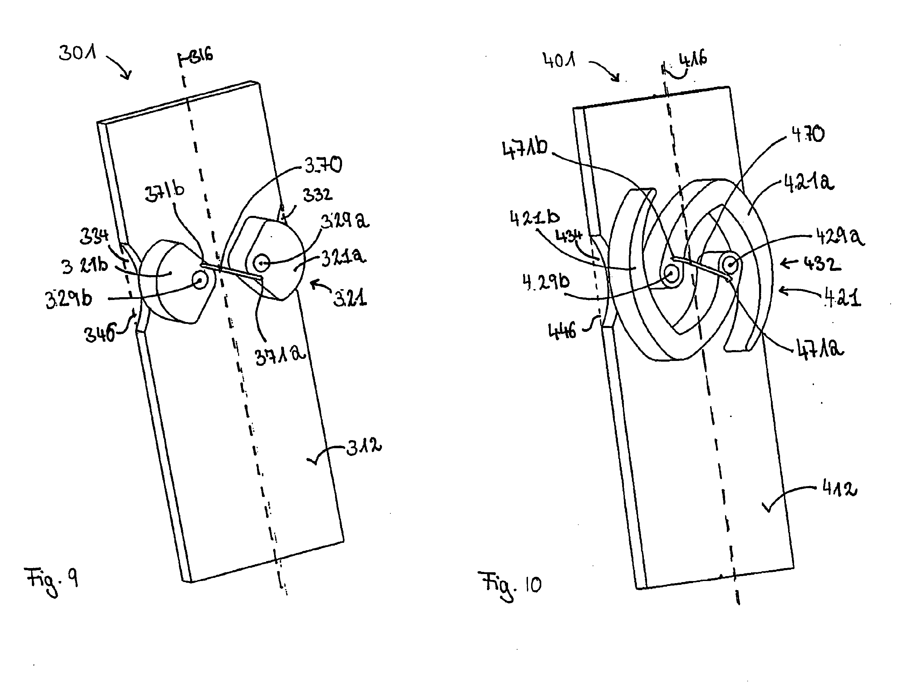

Die Fig. 9 und 10 zeigen jeweils wesentliche Ausschnitte zweier weiterer Ausführungsbeispiele 301 und 401, bei welchen dieses Problem durch eine zweiteilige Ausbildung des Betätigungselements 321 und 421 gelöst ist. Um einen Blick auf die Mechanik der Betätigungselemente 321 und 421 zu ermöglichen, wird jeweils auf die Darstellung des Gehäuses mit Ausnahme der weiter vom Betrachter entfernt liegenden Breitseite 312 bzw 412 des Gehäuses verzichtet. Dennoch ist der Verlauf der Gehäuselängsachsen 316 und 416 sowie der Gehäusehüllkonturen 346 und 446 durch gestrichelte Linien angedeutet und die Position der Betätigungsöffnungen 332, 334, 432 und 434 durch entsprechende Bezugszeichen gekennzeichnet.

In den beiden Ausführungsbeispielen 301 und 401 bestehen die Betätigungselemente 321 und 421 jeweils aus zwei im Wesentlichen formgleichen und spiegelsymmetrisch zur Gehäuselängsachse 316 bzw. 416 angeordneten Betätigungselement-Teilen 321a und 321b oder 421a und 421b. Die Querschnitte der Betätigungselement-Teile 321a und 321b des Bedienungsgeräts 301 parallel zur Breitseite 312 des nicht dargestellten Gehäuses weisen dabei im Wesentlichen die Form eines Kreissegmentes auf. Die entsprechenden Querschnitte der Betätigungselement-Teile 421a und 421b des Bedienungsgeräts 401 parallel zur Breitseite 412 weisen im Wesentlichen die Form einer Sichel auf.

In den Figuren 9 und 10 ist das Betätigungselement 321 bzw. 421 jeweils in der Neutralstellung gezeigt.

Die einzelnen Betätigungselement-Teile 321a, 321b, 421a, 421b sind jeweils um eine senkrecht zu den Breitseiten 312 bzw. 412 des hier nicht dargestellten Gehäuses der Bedienungsgeräte 301 und 401 verlaufende Rotationsachse 329a, 329b 429a oder 429b drehbar im jeweiligen Gehäuse aufgenommen.

Weiterhin sind die zwei Betätigungselement-Teile 321a und 321 b bzw. 421a und 421 b eines Betätigungselements 321 bzw. 421 durch eine Koppelstange 370 bzw. 470 derart miteinander verbunden, dass die Koppelstange 370 bzw. 470 mit ihren Längsenden an Anlenkstellen 371a und 371b bzw. 471a und 471b der Betätigungselement-Teile 321a und 321b bzw. 421a und 421b angelenkt ist, wobei in der dargestellten Neutralstellung des Betätigungselements 321 bzw. 421 die beiden Anlenkstellen 371a und 371b bzw. 471a und 471b auf verschiedenen Seiten einer gedachten Ebene liegen, welche die beiden parallelen Rotationsachsen 329a und 329b bzw. 429a und 429b enthält.

Aufgrund dieser Kopplung bewirkt eine Drehung eines der Betätigungselemente 321a, 321b, 421a bzw. 421b in eine Drehrichtung, also zum Beispiel im Uhrzeigersinn, eine entsprechende Drehung des jeweils anderen Betätigungselement-Teils 321b, 321a, 421b bzw. 421a in die entgegengesetzte Drehrichtung, also beispielsweise gegen den Uhrzeigersinn.

Ein Rechtshänder bedient das dargestellte Bedienungsgerät 301 bzw. 401 durch Drehen des ersten Betätigungselement-Teils 321a bzw. 421a, ein Linkshänder bedient es durch Drehen des zweiten Betätigungselement-Teils 321b bzw. 421b. Bei einem derartigen zweiteilig ausgebildeten Betätigungselement 321 bzw. 421 ist es sinnvoll, dass der im Gerät integrierte Auslenkungssensor die Auslenkung jeweils genau eines Betätigungselement-Teils zum Beispiel 321a oder 421a misst.

Auf eine Darstellung der Rückstellfederanordnung und etwa eines Mitnehmers an den Betätigungselementen 321 und 421 wurde in den Figuren 9 und 10 aus Gründen der Übersichtlichkeit verzichtet. Aufgrund der Kopplung der Betätigungselement-Teile 321a und 321b bzw. 421a und 421b reicht es aus, beispielsweise einen Mitnehmer, wie er anhand des ersten Ausführungsbeispiels beschrieben wurde, an einem der Betätigungselement-Teile 321a oder 321b bzw. 421a oder 421b vorzusehen.

Andere Formen der Kopplung sind ebenfalls möglich, z.B. eine Kopplung mittels Zahnrad, Koppelgetriebe oder Umschlingungstrieb.

## Patentansprüche

1. Tragbares Bedienungsgerät (1; 101; 201; 301; 401) für eine Steuervorrichtung zur Steuerung einer Kippvorrichtung eines Kipperfahrzeugs, umfassend:
- ein aus einer Neutralstellung heraus innerhalb von wenigstens zwei aufeinander abfolgend angeordneten und aneinander anschließenden Auslenkbereichen (56b, 58b, 56c, 58c) auslenkbares Betätigungselement (21; 121; 221; 321; 421), **dadurch gekennzeichnet, daß** das Bedienungsgerät umfaßt weiterhin
- eine Rückstellfederanordnun (53), wobei jedem Auslenkbereich (58b, 58c, 56b, 56c) eine Rückstellcharakteristik zugeordnet ist, und das Betätigungselement (21; 121; 221; 321; 421) innerhalb eines Auslenkbereichs (56b, 56c, 58b, 58c) gegen eine gemäß der dem Auslenkbereich (56b, 56c, 58b, 58c) zugeordneten Rückstellcharakteristik zur Neutralstellung wirkende Rückstellkraft der Rückstellfederanordnung (53) auslenkbar ist, das Bedienungsgerät (1; 101; 201; 301; 401) weiterhin umfassend:
- einen Auslenkungssensor, der dazu eingerichtet ist, die Auslenkung des Betätigungselements (21; 121; 221; 321; 421) zu erfassen und ein vom Maß der Auslenkung abhängiges Sensorsignal bereitzustellen,
- eine Signalabgabeeinrichtung, die dazu eingerichtet ist, das Sensorsignal oder/und ein aus dem Sensorsignal abgeleitetes Ausgabesignal an eine externe Steuervorrichtung zur Steuerung der Kippvorrichtung des Kipperfahrzeugs weiterzuleiten und
- ein Gehäuse (10; 110; 210), in welchem das Betätigungselement (21; 121; 221; 321; 421), die Rückstellfederanordnung (53), der Auslenkungssensor und die Signalabgabeeinrichtung aufgenommen sind.

2. Bedienungsgerät (1; 101; 201; 301; 401) nach Anspruch 1, **dadurch gekennzeichnet, dass** das Betätigungselement (21; 121; 221; 321; 421) in zwei einander entgegengesetzten Auslenkrichtungen jeweils innerhalb von wenigstens zwei aufeinander abfolgend angeordneten und aneinander anschließenden Auslenkbereichen (56b, 56c, 58b, 58c) gegen die gemäß der dem jeweiligen Auslenkbereich (56b, 56c, 58b, 58c) zugeordneten Rückstellcharakteristik wirkende Rückstellkraft der Rückstellfederanordnung (53) aus der Neutralstellung auslenkbar ist.

3. Bedienungsgerät (1; 201) nach einem der vorhergehenden Ansprüche, **dadurch gekennzeichnet, dass** das Betätigungselement (21; 221) durch Drehung um eine Rotationsachse (29; 229) auslenkbar ist.

4. Bedienungsgerät (301; 401) nach Anspruch 2,
**dadurch gekennzeichnet, dass** das Betätigungselement (321; 421) zwei Betätigungselement-Teile (321a, 321b; 421a, 421b) umfasst, wobei das Betätigungselement (321; 421) durch Drehung jedes der zwei Betätigungselement-Teile (321 a, 321 b; 421 a, 421 b) um jeweils eine Rotationsachse (329a, 329b; 429a, 429b) auslenkbar ist, und wobei das Bedienungsgerät (301; 401) weiterhin eine Koppeleinrichtung aufweist, welche die beiden Betätigungselement-Teile (321a, 321 b; 421 a, 421 b) derart koppelt, dass eine Drehung eines Betätigungselement-Teils (321 a, 321 b; 421 a, 421 b) in eine Drehrichtung um einen gegebenen Drehwinkelbetrag eine Drehung des jeweils anderen Betätigungselement-Teils (321 b, 321 a; 421 b, 421 a) in die entgegengesetzte Drehrichtung um diesen Drehwinkelbetrag bewirkt.

5. Bedienungsgerät (301; 401) nach Anspruch 4,
**dadurch gekennzeichnet, dass** die Koppeleinrichtung eine Koppelstange (370; 470) zur mechanischen Kopplung der beiden Betätigungselement-Teile (321 a, 321 b; 421 a, 421 b) umfasst.

6. Bedienungsgerät (1; 101; 201; 301; 401) nach einem der vorhergehenden Ansprüche,
**dadurch gekennzeichnet, dass** das Betätigungselement (21; 121; 221; 321; 421) ein magnetisches, vorzugsweise ferromagnetisches Material umfasst, und dass der Auslenkungssensor ein Magnetfeldsensor, vorzugsweise ein Hallsensor ist.

7. Bedienungsgerät (1; 101; 201; 301; 401) nach einem der vorhergehenden Ansprüche,
**dadurch gekennzeichnet, dass** das Bedienungsgerät (1) wenigstens zwei voneinander räumlich getrennte und gegeneinander abgedichtete, vorzugsweise wasserdicht gegeneinander abgedichtete Kammern (22, 24, 26) umfasst, wobei das Betätigungselement (21; 121; 221; 321; 421) in der einen Kammer (22) aufgenommen ist und der Auslenkungssensor oder/und die Signalabgabeeinrichtung in der anderen Kammer (24, 26) der wenigstens zwei Kammern (22, 24, 26) aufgenommen sind.

8. Bedienungsgerät (1; 101; 201; 301; 401) nach einem der vorhergehenden Ansprüche,
**dadurch gekennzeichnet, dass** das Betätigungselement (21; 121; 221; 321; 421) derart auslenkbar in dem Gehäuse (10; 110; 210) aufgenommen ist, dass wenigstens ein Abschnitt des Betätigungselements (21; 121; 221; 321; 421) von außerhalb des Gehäuses (10; 110; 210) zugänglich ist, wobei Formen und Abmessungen des Gehäuses (10; 110; 210) und des Betätigungselements (21; 121; 221; 321; 421) so gewählt sind, dass das Bedienungsgerät (1; 101; 201; 301; 401) von einer Bedienungsperson in einer Hand haltbar und während des Haltens in der einen Hand mit dem Daumen dieser Hand durch Auslenken des Betätigungselements (21; 121; 221; 32.1; 421) bedienbar ist.

9. Bedienungsgerät (1; 101; 201; 301; 401) nach Anspruch 8,
**dadurch gekennzeichnet, dass** das Gehäuse (10; 110: 210) eine das Gehäuse (10; 110; 210) vollständig umhüllende Gehäusehüllkontur (46; 146; 246; 346; 446) definiert, und dass der wenigstens eine Abschnitt des Betätigungselements (21; 121; 221; 321; 421), welcher von außerhalb des Gehäuses (10; 110; 210) zugänglich ist, sich vollständig innerhalb dieser Gehäusehüllkontur (46; 146; 246; 346; 446) befindet.

10. Bedienungsgerät (1) nach Anspruch 8 oder 9,
**dadurch gekennzeichnet, dass** das Gehäuse (10) zumindest näherungsweise die Form eines sich längs einer Gehäuselängsachse (16) erstreckenden Quaders mit zwei Breit- (12) und zwei Schmalseiten (14) aufweist,
wobei das Betätigungselement (21) im Wesentlichen die Form eines Drehrads (23) aufweist, welches um eine in Bezug auf das Gehäuse (10) ortsfeste, im Wesentlichen senkrecht zu den Breitseiten (12) des Gehäuses (10) verlaufende Rotationsachse (29) derart drehbar in dem Gehäuse (10) aufgenommen ist, dass auf beiden Schmalseiten (14) des Gehäuses (10) jeweils wenigstens ein Umfangsabschnitt des Drehrads (23) durch Betätigungsöffnungen (32, 34) im Gehäuse (10) von außerhalb des Gehäuses (10) zugänglich ist.

11. Bedienungsgerät (301; 401) nach Anspruch 8 oder 9, jeweils unter Berücksichtigung von Anspruch 4,
**dadurch gekennzeichnet, dass** das Gehäuse zumindest näherungsweise die Form eines sich längs einer Gehäuselängsachse (316; 416) erstreckenden Quaders mit zwei Breit- (312; 412) und zwei Schmalseiten aufweist,
wobei die zwei Betätigungselement-Teile (321 a, 321 b; 421 a, 421 b) jeweils um eine in Bezug auf das Gehäuse ortsfeste, im Wesentlichen senkrecht zu den Breitseiten (312; 412) des Gehäuses verlaufende Rotationsachse (329a, 329b; 429a, 429b) derart drehbar in dem Gehäuse aufgenommen sind, dass auf einer der zwei Schmalseiten (321a; 421a) des Gehäuses wenigstens ein Umfangsabschnitt eines Betätigungselement-Teiles (321 a, 321 b; 421 a, 421 b) und auf der anderen Schmalseite wenigstens ein Umfangsabschnitt des jeweils anderen Betätigungselement-Teiles (321 b, 321a; 421 b, 421 a) durch Betätigungsöffnungen (332, 334; 432, 434) im Gehäuse von außerhalb des Gehäuses zugänglich ist.

12. Bedienungsgerät (1; 201; 301; 401) nach einem der vorhergehenden Ansprüche,
**dadurch gekennzeichnet, dass** das Betätigungselement (21;221; 321;421) durch Drehung des Betätigungselements (21;221) oder eines der Betätigungselement-Teile (321a, 321b; 421a; 421b) um eine Rotationsachse (29; 229; 329a, 329b; 429a, 429b) auslenkbar ist, und dass es einen sich im Wesentlichen parallel zur Rotationsachse (29; 229; 329a, 329b; 429a, 429b) erstreckenden Mitnehmer (48) aufweist, welcher sich bei der Neutralstellung des Betätigungselements (21; 221;321;421) in einer Neutralposition befindet und bei einer Auslenkung des Betätigungselements (21; 221;321;421) aus der Neutralstellung mit der Rückstellfederanordnung (53) zusammenwirkt.

13. Bedienungsgerät (1; 201; 301; 401) nach Anspruch 12 und Anspruch 2, **dadurch gekennzeichnet, dass** die Rückstellfederanordnung (53) wenigstens zwei Schenkelfedern (50, 52) mit jeweils einer Torsionsachse (50a, 52a) und jeweils einem ersten (50b, 52b) und einem zweiten Schenkel (50c, 52c) sowie eine Anschlagsanordnung (38) mit wenigstens einem ortsfest am Gehäuse vorgesehenen Anschlagselement (36a, 36b, 36c) umfasst,
wobei für jede der Schenkelfedern (50, 52) die Torsionachse (50a, 52a) im Wesentlichen mit der Rotationsachse (29) des Betätigungselements (21; 221) bzw. des Betätigungselement-Teils (321a, 321 b; 421a, 421b) übereinstimmt und die jeweils zwei Schenkel (50b, 50c, 52b, 52c) sich im Wesentlichen radial von der Rotationsachse (29) weg erstrecken, wobei für jede der Schenkeifedern (50, 52) der jeweilige erste Schenkel (50b, 52b) genau einem Auslenkbereich (56b) der ersten Auslenkrichtung und der jeweilige zweite Schenkel (50c, 52c) genau einem Auslenkbereich (56c) der zweiten Auslenkrichtung zugeordnet ist,
wobei die Schenkelfedern (50, 52) derart angeordnet sind, dass in einer Neutralstellung des Betätigungselements (21; 221; 321; 421) für jede der zwei Auslenkrichtungen die Abfolge der Schenkel (50b, 52b, 50c, 52c) in Umfangsrichtung um die Rotationsachse (29), ausgehend von der Neutralposition des Mitnehmers (48), der Abfolge der Auslenkbereiche (56b, 58b, 56c, 58c) entspricht, die den Schenkeln (50b, 52b, 50c, 52c) zugeordnet sind,
wobei in einer Neutralstellung des Betätigungselements (21; 221; 321; 421) jeder Schenkel (50b, 52b, 50c, 52c) einer Schenkelfeder (50, 52) mit einer auf den Mitnehmer (48) in seiner Neutralposition hinweisenden Seite an einem Anschlagselement (36a, 36b, 36c) der Anschlagsanordnung (38) anliegt, wobei bei einer Auslenkung des Betätigungselements (21; 221; 321; 421) in einem gegebenen Auslenkbereich (56b, 56c, 58b, 58c) der Mitnehmer (48) den Schenkel (50b, 52b, 50c, 52c) oder die Schenkel (50b, 52b, 50c, 52c) auslenkt, welchem oder welchen der gegebene Auslenkbereich (56b, 56c, 58b, 58c) zugeordnet ist, sowie die Schenkel (50b, 52b, 50c, 52c) auslenkt, welchen solche Auslenkbereiche (56b, 56c, 58b, 58c) zugeordnet sind, die in der Abfolge vor dem gegebenen Auslenkbereich (56b, 56c, 58b, 58c) liegen.

14. Bedienungsgerät (1; 101; 201; 301; 401) nach einem der vorhergehenden Ansprüche,
**dadurch gekennzeichnet, dass** die Auslenkung des Betätigungselements (21; 121; 221; 321; 421) in unterschiedlichen Auslenkbereichen (56b, 56c, 58b, 58c) unterschiedlichen Steuerfunktionen der Steuervorrichtung zugeordnet ist.

15. Bedienungsgerät (1; 101; 201; 301; 401) nach einem der vorhergehenden Ansprüche,
**dadurch gekennzeichnet, dass** wenigstens ein Auslenkbereich (56b, 56c) wenigstens zwei Teilbereiche (60b, 60c, 61b, 61c) umfasst, und dass die Auslenkung des Betätigungselements (21; 221; 321; 421) in unterschiedlichen Teilbereichen (60b, 61b, 60c, 61c) des wenigstens einen Auslenkbereichs (56b, 56c) unterschiedlichen Steuerfunktionen der Steuervorrichtung zugeordnet ist.

16. Bedienungsgerät (1; 101; 201; 301; 401) nach Anspruch 15 unter Berücksichtigung der Ansprüche 14 und 2,
**dadurch gekennzeichnet, dass** der erste Auslenkbereich (56b, 56c) für beide Richtungen jeweils einen näher an der Neutralstellung gelegenen ersten Teilbereich (60b, 60c) und einen sich an den ersten Teilbereich (60b, 60c) anschließenden zweiten Teilbereich (61 b, 61 c) umfasst,
und dass im ersten Teilbereich (60b, 60c) des ersten Auslenkbereichs (56b, 56c) für beide Auslenkrichtungen jede Auslenkung des Betätigungselements (21; 121; 221; 321; 421) einem Halten der Kippvorrichtung in der aktuellen Position zugeordnet ist,
dass im zweiten Teilbereich (61 b, 61 c) des ersten Auslenkbereichs die Auslenkung des Betätigungselements (21; 121; 221; 321; 421) für eine erste Auslenkrichtung einer mit dem Maß der Auslenkung zunehmenden Geschwindigkeit eines Kippens der Kippvorrichtung von einer Ausgangs- in eine Endposition
und für die der ersten Auslenkrichtung entgengesetze zweite Auslenkrichtung einer mit dem Maß der Auslenkung zunehmenden Geschwindigkeit eines Kippens der Kippvorrichtung von einer End- in eine Ausgangsposition zugeordnet ist,
und dass jede Auslenkung im zweiten Auslenkbereich (58b, 58c) für die erste Auslenkrichtung einer Endpositions-Sonderfunktion, insbesondere einem automatisch gesteuerten Kippen der Kippvorrichtung in die Endposition und für die zweite Auslenkrichtung einer Ausgangsposition-Sonderfunktion, insbesondere einem automatisch gesteuerten Kippen der Kippvorrichtung in die Ausgangsposition zugeordnet ist.

17. Bedienungsgerät (1; 101; 201; 301; 401) nach einem der vorhergehenden Ansprüche,
**dadurch gekennzeichnet, dass** die Signalabgabeeinrichtung einen Funksender zur Weiterleitung des Sensorsignals oder eines daraus abgeleiteten Ausgabesignals an eine externe Steuervorrichtung zur Steuerung der Kippvorrichtung des Kipperfahrzeugs umfasst.

18. Bedienungsgerät (1; 101; 201; 301; 401) nach einem der vorhergehenden Ansprüche,
**dadurch gekennzeichnet, dass** es eine Umwandlungseinrichtung, vorzugsweise eine Mikroprozessoreinrichtung, zur Umwandlung des Sensorsignals in ein daraus abgeleitetes Ausgabesignal umfasst, wobei die Ableitung des Ausgabesignals aus dem Sensorsignal für unterschiedliche Auslenkbereiche (56b, 58b, 56c, 58c) oder/und für unterschiedliche Teilbereiche (60b, 61 b, 60c, 61 c) eines Auslenkbereichs (56b, 56c) durch unterschiedliche vorgegebene Zuordnungsvorschriften erfolgt.

19. Bedienungsgerät (1; 101; 201; 301; 401) nach einem der vorhergehenden Ansprüche,
**dadurch gekennzeichnet, dass** es wenigstens einen Vorwahlschalter (13a, 113a, 213a) umfasst, über den wenigstens zwei Vorwahlfunktionen auswählbar sind, wobei die Auslenkung des Betätigungselements (21; 121; 221; 321; 421) in einem Auslenkbereich (56b, 56c, 58b, 58c) unterschiedlichen Steuerfunktionen zugeordnet ist, wenn unterschiedliche Vorwahlfunktionen ausgewählt sind.

20. Bedienungsgerät (1; 101; 301; 401) nach einem der vorhergehenden Ansprüche,
**dadurch gekennzeichnet, dass** es eine Anzeige (19; 119) umfasst, auf der während der Bedienung zu jedem Zeitpunkt die Auslenkung des Betätigungselements (21; 121; 321; 421) oder/und das Sensorsignal oder/und das Ausgabesignal oder/und der Auslenkbereich (56b, 56c, 58b, 58c) oder/und der Teilbereich (60b, 61 b, 60c, 61 c) eines Auslenkbereichs (56b, 56c), in dem sich das Betätigungselement (21; 121; 321; 421) befindet, oder/und eine ausgewählte Vorwahlfunktion angezeigt werden.

21. Kipperfahrzeug mit einer Kippvorrichtung, einer Steuervorrichtung zur Steuerung der Kippvorrichtung und einem Bedienungsgerät (1; 101; 201; 301; 401) für die Steuervorrichtung nach einem der vorhergehenden Ansprüche.

## Claims

1. A portable operating device (1;101;201;301;401) for a control apparatus for controlling a tipping gear of a tipper vehicle, comprising:
- an actuating element (21;121;221;321;421) which can be deflected from a neutral position within at least two successively arranged and adjacent deflection ranges (56b,58b,56c,58c), **characterised in that** the operating device further comprises:
- a return spring assembly (53),
wherein each deflection range (58b,58c,56b,56c) is assigned a return characteristic and the actuating element (21;121;221;321;421) can be deflected within a deflection range (56b,56c,58b,58c) against a return characteristic which is assigned according to the return characteristic assigned to the deflection range (56b,56c,58b,58c) to the restoring force of the return spring assembly (53) acting towards the neutral position,
the operating device (1;101;201;301;401) further comprising:
- a deflection sensor which is set up to detect the deflection of the actuating element (21;121;221;321;421) and to make available a sensor signal dependent on the degree of the deflection,
- a signal-emitting device which is set up to route the sensor signal and/or an output signal derived from the sensor signal to an external control apparatus for controlling the tipping gear of the tipper vehicle and
- a housing (10;110;210) in which the actuating element (21;121;221;321;421), the return spring assembly (53), the deflection sensor and the signal-emitting device are accommodated.

2. An operating device (1;101;201;301;401) according to Claim 1, **characterised in that** the actuating element (21;121;221;321;421) can be deflected from the neutral position in two mutually opposed deflection directions respectively within at least two successively arranged and adjacent deflection ranges (56b,56c,58b,58c) against the restoring force of the return spring assembly (53) acting according to the return characteristic assigned to the respective deflection range (56b,58b,56c,58c).

3. An operating device (1;201) according to one of the preceding Claims, **characterised in that** the actuating element (21;121) can be deflected by rotation about an axis of rotation (29;229).

4. An operating device (301;401) according Claim 2, **characterised in that** the actuating element (321;421) comprises two actuating element parts (321a,321b;421a,421b), wherein the actuating element (321;421) can be deflected by rotation of each of the two actuating element parts (321a,321b;421a,421b) about a respective axis of rotation (329a,329b;429a,429b), and wherein the operating device (301;401) also has a coupling unit which couples the two actuating element parts (321a,321b;421a,421b) so that a rotation of one actuating element part (321a,321b;421a,421b) in one direction of rotation by a given angle of rotation amount effects a rotation of the respective other actuating element part (321b,321a;421b,421a) in the opposite direction of rotation by this angle of rotation amount.

5. An operating device (301;401) according to Claim 4, **characterised in that** the coupling device comprises a coupling rod (370;470) for the mechanical coupling of the two actuating element parts (321a,321b;421a,421b).

6. An operating device (1;101;201;301;401) according to any one of the preceding Claims, **characterised in that** the actuating element (21;121;221;321;421) comprises a magnetic, preferably ferromagnetic, material, and **in that** the deflection sensor is a magnetic field sensor, preferably a Hall-effect sensor.

7. An operating device (1;101;201;301;401) according to any one of the preceding Claims, **characterised in that** the operating device (1;101;201;301;401) comprises at least two spatially separated chambers (22,24,26) which are sealed from one another, preferably sealed watertight from one another, wherein the actuating element (21;121;221;321;421) is accommodated in one chamber (22) and the deflection sensor and/or the signal-emitting device is/are accommodated in the other chamber (24,26) of the at least two chambers (22,24,26).

8. An operating device (1;101;201;301;401) according to any one of the preceding Claims, **characterised in that** the actuating element (21;121;221;321;421) is accommodated so that it can be deflected in the housing (10;110;210) in such a way that at least one portion of the actuating element (21;121;221;321;421) is accessible from outside the housing (10;110;210), wherein the forms and dimensions of the housing (10;110;210) and of the actuating element (21;121;221;321;421) are chosen so that the operating device (1;101;201;301;401) can be held in one hand by an operator and while being held in one hand it can be operated with the thumbs of this hand by deflecting the actuating element (21; 121; 221; 321; 421).

9. An operating device (1;101;201;301;401) according to Claim 8, **characterised in that** the housing (10;110;210) defines a housing shell contour (46;146;246;346;446) completely enveloping the housing (10;110;210), and **in that** the at least one portion of the actuating element (21;121;221;321;421), which is accessible from outside the housing (10;110;210), is situated completely inside this housing shell contour (46;146; 246; 346; 446).

10. An operating device (1) according to Claim 8 or 9, **characterised in that** the housing (10) is approximately in the form of a parallelepiped extending along a housing longitudinal axis (16) and with two wide sides (12) and two narrow sides (14),
wherein the actuating element (21) is substantially in the form of a rotary wheel (23) which is accommodated in the housing (10) so as to be rotatable about an axis of rotation (29), which is stationary in relation to the housing (10) and which extends substantially perpendicular to the wide sides (12) of the housing (10), so that on both narrow sides (14) of the housing (10) in each case at least one peripheral portion of the rotary wheel (23) is accessible from outside the housing (10) through actuating apertures (32,34) in the housing (10).

11. An operating device (301;401) according to Claim 8 or 9, respectively with consideration to Claim 4, **characterised in that** the housing is at least approximately in the form of a parallelepiped extending along a housing longitudinal axis (316;416) and with two wide sides (312;412) and two narrow sides,
wherein the two actuating element parts (321a,321b;421a,421b) are accommodated in the housing so as to be rotatable respectively about an axis of rotation (329a,329b;429a,429b), which is stationary in relation to the housing and which extends substantially perpendicular to the wide sides (312;412) of the housing, so that on one of the two narrow sides (321a;421a) of the housing at least one peripheral portion of an actuating element part (321a,321b;421a,421b) and on the other narrow side at least one peripheral portion of the respective other actuating element part (321b,321a;421b,421a) is accessible from outside the housing through actuating apertures (332,334;432,434) in the housing (10).

12. An operating device (1;201;301;401) according to any one of the preceding Claims, **characterised in that** the actuating element (21;221;321;421) can be deflected by rotation of the actuating element (21;221) or of one of the actuating element parts (321a,321b;421a,421b) about an axis of rotation (29;229;329a,329b;429a,429b), and **in that** it has an entrainment member (48) which extends substantially parallel to the axis of rotation (29;229;329a,329b;429a,429b) and which is situated in a neutral position in the neutral position of the actuating element (21;221;321;421) and, in the event of a deflection of the actuating element (21;221;321;421) from the neutral position, co-operates with the return spring assembly (53).

13. An operating device (1;101;201;301;401) according to Claim 12 and Claim 2, **characterised in that** the return spring assembly (53) comprises at least two lever springs (50,52) with a respective torsion axis (50a,52a) and a respective first lever (50b,52b) and a second lever (50c,52c), and also an abutment assembly (38) with at least one abutment member (36a,36b,36c) provided stationary on the housing,
wherein for each of the lever springs (50,52) the torsion axis (50a,52a) coincides substantially with the axis of rotation (29) of the actuating element (21;221) or of the actuating element part (321a,321b;421a,421b), and the respective two levers (50b,50c,52b,52c) extend substantially radially away from the axis of rotation (29), wherein for each of the lever springs (50,52) the respective first lever (50b,52b) is assigned exactly to one deflection range (56b) of the first deflection direction and the respective second lever (50c,52c) is assigned exactly to one deflection range (56c) of the second deflection direction,
wherein the lever springs (50,52) are arranged so that, in a neutral position of the actuating element (21;221;321;421), for each of the two deflection directions the sequence of the levers (50b,52b,50c,52c) in the peripheral direction about the axis of rotation (29), starting from the neutral position of the entrainment member (48), corresponds to the sequence of the deflection ranges (56b,58b,56c,58c) which are assigned to the levers (50b,52b,50c,52c),
wherein, in a neutral position of the actuating element (21;221;321;421), each lever (50b,52b,50c,52c) of a lever spring (50,52) abuts with one side pointing towards the entrainment means (48) in its neutral position against an abutment member (36a,36b,36b) of the abutment assembly (38), wherein, in the event of a deflection of the actuating element (21;221;321;421) in a given deflection range (56b,56c, 58b,58c), the entrainment means (48) deflects the lever (50b,52b,50c,52c) or the levers (50b,52b,50c,52c) which lever or levers is/are assigned to the given deflection range (56b,56c,58b,58c), and also deflects the levers (50b,52b,50c,52c) which are assigned to those deflection ranges (56b,56c,58b,58c) which in the sequence lie ahead of the given deflection range (56b,56c,58b,58c).

14. An operating device (1;101;201;301;401) according to any one of the preceding Claims, **characterised in that** the deflection of the actuating element (21;221;321;421) in different deflection ranges (56b,56c,58b,58c) is assigned to different control functions of the control apparatus.

15. An operating device (1;101;201;301;401) according to any one of the preceding Claims, **characterised in that** at least one deflection range (56b,56c) comprises at least two sub-ranges (60b,60c,61b,61c), and **in that** the deflection of the actuating element (21;221;321;421) in different sub-ranges (60b,61b,60c,61c) of the at least one deflection range (56b,56c) is assigned to different control functions of the control apparatus.

16. An operating device (1;101;201;301;401) according to Claim 15, respectively with consideration to Claims 4 and 12, **characterised in that** the first deflection range (56b,56c) comprises for both directions in each case a first sub-range (60b,60c) situated nearer the neutral position and a second sub-range (61b,61c) adjacent the first sub-range (60b,60c),
and **in that** in the first sub-range (60b,60c) of the first deflection range (56b,56c) for both deflection directions each deflection of the actuating element (21;121;221;321;421) is assigned to the tipping gear being held in the current position,
**in that** in the second sub-range (61b,61c) of the first deflection range the deflection of the actuating element (21;121;221;321;421) for a first deflection direction is assigned to a speed, which increases with the degree of the deflection, of a tipping of the tipping gear from a starting position into an end position
and for the second deflection direction opposed to the first deflection direction there is assigned a speed, which increases with the degree of the deflection, of a tipping of the tipping gear from an end position into a starting position,
and **in that** each deflection in the second deflection range (58b,58c) for the first deflection direction is assigned to an end position special function, in particular an automatically controlled tipping of the tipping gear into the end position and for the second deflection direction there is assigned a starting position special function, in particular an automatically controlled tipping of the tipping gear into the starting position.

17. An operating device (1;101;201;301;401) according to any one of the preceding Claims, **characterised in that** signal-emitting device comprises a radio transmitter for routing the sensor signal or an output signal derived therefrom to an external control apparatus for controlling the tipping gear of the tipper vehicle.

18. An operating device (1;101;201;301;401) according to any one of the preceding Claims, **characterised in that** comprises a transducer device, preferably a microprocessor device, for converting the sensor signal into an output signal derived therefrom, wherein the derivation of the output signal from the sensor signal is effected for different deflection ranges (56b,58b,56c,58c) and/or for different sub-ranges (60b,61b,60c,61c) of a deflection range (56b,56c) by different predetermined association specifications.

19. An operating device (1;101;201;301;401) according to any one of the preceding Claims, **characterised in that** it comprises at least one preselection switch (13a,113a,213a) by way of which at least two preselection functions can be selected, wherein the deflection of the actuating element (21;121;221;321;421) in one deflection range (56b,56c,58b,58c) is assigned to different control functions when different preselection functions are selected.

20. An operating device (1;101;301;401) according to any one of the preceding Claims, **characterised in that** it comprises a display (19;119) on which are displayed at any moment during operation the deflection of the actuating element (21;121;321;421) and/or the sensor signal and/or the output signal and/or the deflection range (56b,56c,58b,58c) and/or the sub-range (60b,61b,60c,61c) of a deflection range (56b,56c), in which the actuating element (21;121;321;421) is situated, and/or a selected preselection function.

21. A tipper vehicle with a tipping gear, a control apparatus for controlling the tipping gear and an operating device (1;101;201;301;401) for the control apparatus according to any one of the preceding Claims.

## Revendications

1. Appareil de commande portable (1 ; 101 ; 201 ; 301 ; 401) pour un dispositif de commande permettant de commander un dispositif de basculement d'un véhicule à benne basculante, comprenant :
- un élément d'actionnement (21 ; 121 ; 221 ; 321 ; 421) pouvant être dévié à partir d'une position neutre à l'intérieur d'au moins deux plages de déviation (56b, 58b, 56c, 58c) consécutives et disposées les unes après les autres,
**caractérisé en ce que** l'appareil de commande comprend en outre :
- un ensemble de ressort de rappel (53),
dans lequel une caractéristique de rappel est affectée à chaque plage de déviation (58b, 58c, 56b, 56c), et l'élément d'actionnement (21 ; 121 ; 221 ; 321 ; 421) peut être dévié à l'intérieur d'une plage de déviation (56b, 56c, 58b, 58c) contre une force de rappel de l'ensemble de ressort de rappel (53) agissant vers la position neutre selon la caractéristique de rappel affectée à la plage de déviation (56b, 56c, 58b, 58c),
l'appareil de commande (1 ; 101 ; 201 ; 301 ; 401) comprenant en outre :
- un capteur de déviation qui est aménagé pour détecter la déviation de l'élément d'actionnement (21 ; 121 ; 221 ; 321 ; 421) et fournir un signal de capteur dépendant de la grandeur de la déviation,
- un équipement de signalisation qui est aménagé pour retransmettre le signal de capteur ou/et un signal de sortie dérivé du signal de capteur à un dispositif de commande externe pour commander le dispositif de basculement du véhicule à benne basculante, et
- un boîtier (10 ; 110 ; 210) qui reçoit l'élément d'actionnement (21 ; 121 ; 221 ; 321 ; 421), l'ensemble de ressort de rappel (53), le capteur de déviation et l'équipement de signalisation.

2. Appareil de commande (1 ; 101 ; 201 ; 301 ; 401) selon la revendication 1,
**caractérisé en ce que** l'élément d'actionnement (21 ; 121 ; 221 ; 321 ; 421) peut être dévié de la position neutre dans deux directions de déviation mutuellement opposées, respectivement à l'intérieur d'au moins deux plages de déviation (56b, 56c, 58b, 58c) disposées successivement et étant adjacentes les unes aux autres, contre la force de rappel de l'ensemble de ressort de rappel (53) agissant selon la caractéristique de rappel affectée à la plage de déviation respective (56b, 56c, 58b, 58c).

3. Appareil de commande (1 ; 201) selon l'une quelconque des revendications précédentes,
**caractérisé en ce que** l'élément d'actionnement (21 ; 221) peut être dévié par une rotation autour d'un axe de rotation (29 ; 229).

4. Appareil de commande (301 ; 401) selon la revendication 2, **caractérisé en ce que** l'élément d'actionnement (321 ; 421) comprend deux parties d'élément d'actionnement (321 a, 321 b ; 421 a, 421 b), dans lequel l'élément d'actionnement (321 ; 421) peut être dévié par une rotation de chacune des deux parties d'élément d'actionnement (321 a, 321 b ; 421 a, 421 b) respectivement autour d'un axe de rotation (329a, 329b ; 429a, 429b),
et dans lequel l'appareil de commande (301 ; 401) présente en outre un équipement d'accouplement qui accouple les deux parties d'élément d'actionnement (321a, 321 b ; 421a, 421b) de telle sorte qu'une rotation d'une partie d'élément d'actionnement (321a, 321 b ; 421a, 421 b) dans une direction de rotation d'une valeur d'angle de rotation donnée provoque une rotation respectivement de l'autre partie d'élément d'actionnement (321 b, 321 a ; 421 b, 421 a) dans la direction de rotation opposée et environ de cette valeur d'angle de rotation.

5. Appareil de commande (301 ; 401) selon la revendication 4, **caractérisé en ce que** l'équipement d'accouplement comprend une bielle d'accouplement (370 ; 470) pour un accouplement mécanique des deux parties d'élément d'actionnement (321 a, 321 b ; 421 a, 421 b).

6. Appareil de commande (1 ; 101 ; 201 ; 301 ; 401) selon l'une quelconque des revendications précédentes,
**caractérisé en ce que** l'élément d'actionnement (21 ; 121 ; 221 ; 321 ; 421) comprend un matériau magnétique, de préférence ferromagnétique, et **en ce que** le capteur de déviation est un capteur de champ magnétique, de préférence un capteur de Hall.

7. Appareil de commande (1 ; 101 ; 201 ; 301 ; 401) selon l'une quelconque des revendications précédentes,
**caractérisé en ce que** l'appareil de commande (1) comprend au moins deux chambres (22, 24, 26) physiquement séparées et rendues étanches, de préférence étanches à l'eau, les unes par rapport aux autres, dans lequel l'élément d'actionnement (21 ; 121 ; 221 ; 321 ; 421) est reçu dans une chambre (22) et le capteur de déviation ou/et l'équipement de signalisation est/sont reçu(s) dans l'autre chambre (24, 26) desdites au moins deux chambres (22, 24, 26).

8. Appareil de commande (1 ; 101 ; 201 ; 301 ; 401) selon l'une quelconque des revendications précédentes,
**caractérisé en ce que** l'élément d'actionnement (21 ; 121 ; 221 ; 321 ; 421) est reçu dans le boîtier (10 ; 110 ; 210) de façon à pouvoir être dévié de telle sorte qu'au moins une portion de l'élément d'actionnement (21 ; 121 ; 221 ; 321 ; 421) est accessible depuis l'extérieur du boîtier (10 ; 110 ; 210), dans lequel les formes et dimensions du boîtier (10; 110; 210) et de l'élément d'actionnement (21 ; 121 ; 221 ; 321 ; 421) sont choisies de telle sorte que l'appareil de commande (1 ; 101 ; 201 ; 301 ; 401) peut être tenu d'une main par un opérateur, et pendant qu'il est maintenu dans ladite une main, il peut être actionné par le pouce de cette main par une déviation de l'élément d'actionnement (21 ; 121 ; 221 ; 321 ; 421).

9. Appareil de commande (1 ; 101 ; 201 ; 301 ; 401) selon la revendication 8,
**caractérisé en ce que** le boîtier (10 ; 110 : 210) définit un contour d'enveloppe de boîtier (46 ; 146 ; 246 ; 346 ; 446) enveloppant complètement le boîtier (10 ; 110 ; 210), et **en ce que** ladite au moins une portion de l'élément d'actionnement (21 ; 121 ; 221 ; 321 ; 421) qui est accessible depuis l'extérieur du boîtier (10 ; 110 ; 210) se trouve complètement à l'intérieur de ce contour d'enveloppe de boîtier (46 ; 146 ; 246 ; 346 ; 446).

10. Appareil de commande (1) selon la revendication 8 ou 9,
**caractérisé en ce que** le boîtier (10) présente au moins approximativement la forme d'un parallélépipède avec deux côtés plats (12) et deux tranches (14) et s'étendant suivant un axe longitudinal de boîtier (16),
dans lequel l'élément d'actionnement (21) présente substantiellement la forme d'une molette (23) qui est reçue dans le boîtier (10) de façon à pouvoir tourner autour d'un axe de rotation (29), stationnaire par rapport au boîtier (10) et s'étendant substantiellement verticalement par rapport aux côtés plats (12) du boîtier (10), de telle sorte que sur les deux tranches (14) du boîtier (10), respectivement au moins une portion circonférentielle de la molette (23) est accessible depuis l'extérieur du boîtier (10), à travers des ouvertures d'actionnement (32, 34) dans le boîtier (10).

11. Appareil de commande (301 ; 401) selon la revendication 8 ou 9, respectivement en tenant compte de la revendication 4,
**caractérisé en ce que** le boîtier présente au moins approximativement la forme d'un parallélépipède avec deux côtés plats (312 ; 412) et deux tranches et s'étendant suivant un axe longitudinal de boîtier (316 ; 416),
dans lequel les deux parties d'élément d'actionnement (321 a, 321 b ; 421 a, 421 b) sont reçues en rotation dans le boîtier, respectivement autour d'un axe de rotation (329a, 329b ; 429a, 429b), stationnaire par rapport au boîtier et s'étendant de façon substantiellement verticale aux côtés plats (312 ; 412) du boîtier, de telle sorte que sur l'une des deux tranches (321 a ; 421 a) du boîtier, au moins une portion circonférentielle d'une partie d'élément d'actionnement (321 a, 321 b ; 421 a, 421 b) et sur l'autre tranche au moins une portion circonférentielle de l'autre partie d'élément d'actionnement respective (321 b, 321 a ; 421 b, 421 a) est accessible depuis l'extérieur du boîtier, à travers des ouvertures d'actionnement (332, 334 ; 432, 434) dans le boîtier.

12. Appareil de commande (1 ; 201 ; 301 ; 401) selon l'une quelconque des revendications précédentes,
**caractérisé en ce que** l'élément d'actionnement (21 ; 221 ; 321 ; 421) peut être dévié par une rotation de l'élément d'actionnement (21 ; 221) ou d'une partie d'élément d'actionnement (321a, 321b ; 421 a ; 421b) autour d'un axe de rotation (29 ; 229 ; 329a, 329b ; 429a, 429b), et **en ce qu'**il présente un entraîneur (48) s'étendant de façon substantiellement parallèle à l'axe de rotation (29 ; 229 ; 329a, 329b ; 429a, 429b), qui dans la position neutre de l'élément d'actionnement (21 ; 221 ; 321 ; 421) se trouve dans une position neutre, et en cas de déviation de l'élément d'actionnement (21 ; 221 ; 321 ; 421) hors de la position neutre coopère avec l'ensemble de ressort de rappel (53).

13. Appareil de commande (1 ; 201 ; 301 ; 401) selon la revendication 12 et la revendication 2, **caractérisé en ce que** l'ensemble de ressort de rappel (53) comprend au moins deux ressorts à branches (50, 52) avec respectivement un axe de torsion (50a, 52a) et respectivement une première branche (50b, 52b) et une deuxième branche (50c, 52c) ainsi qu'un ensemble de butée (38) avec au moins un élément de butée (36a, 36b, 36c) prévu de façon stationnaire sur le boîtier,
dans lequel pour chacun des ressorts à branches (50, 52) l'axe de torsion (50a, 52a) coïncide substantiellement avec l'axe de rotation (29) de l'élément d'actionnement (21 ; 221) ou de la partie d'élément d'actionnement (321a, 321 b ; 421a, 421b), et les deux branches (50b, 50c, 52b, 52c) respectivement s'écartent de façon substantiellement radiale de l'axe de rotation (29), dans lequel pour chacun des ressorts à branches (50, 52), respectivement la première branche (50b, 52b) est affectée exactement à une plage de déviation (56b) de la première direction de déviation et respectivement la deuxième branche (50c, 52c) est affectée exactement à une plage de déviation (56c) de la deuxième direction de déviation,
dans lequel les ressorts à branches (50, 52) sont disposés de telle sorte que dans une position neutre de l'élément d'actionnement (21 ; 221 ; 321 ; 421) pour chacune des deux directions de déviation, la séquence des branches (50b, 52b, 50c, 52c) dans la direction circonférentielle autour de l'axe de rotation (29), en partant de la position neutre de l'entraîneur (48), correspond à la séquence des plages de déviation (56b, 58b, 56c, 58c) qui sont affectées aux branches (50b, 52b, 50c, 52c),
dans lequel dans une position neutre de l'élément d'actionnement (21 ; 221 ; 321 ; 421), chaque branche (50b, 52b, 50c, 52c) d'un ressort à branches (50, 52) s'applique par son côté orienté vers l'entraîneur (48) dans sa position neutre contre un élément de butée (36a, 36b, 36c) de l'ensemble de butée (38), dans lequel, en cas de déviation de l'élément d'actionnement (21 ; 221 ; 321 ; 421) dans une plage de déviation donnée (56b, 56c, 58b, 58c) l'entraîneur (48) fait dévier la branche (50b, 52b, 50c, 52c) ou la branche (50b, 52b, 50c, 52c), à laquelle ou auxquelles est affectée la plage de déviation donnée (56b, 56c, 58b, 58c), et fait dévier les branches (50b, 52b, 50c, 52c) auxquelles sont affectées les plages de déviation (56b, 56c, 58b, 58c) qui se trouvent dans la séquence avant la plage de déviation donnée (56b, 56c, 58b, 58c).

14. Appareil de commande (1 ; 101 ; 201 ; 301 ; 401) selon l'une quelconque des revendications précédentes,
**caractérisé en ce que** la déviation de l'élément d'actionnement (21 ; 121 ; 221 ; 321 ; 421) dans différentes plages de déviation (56b, 56c, 58b, 58c) est affectée à différentes fonctions de commande du dispositif de commande.

15. Appareil de commande (1 ; 101 ; 201 ; 301 ; 401) selon l'une quelconque des revendications précédentes,
**caractérisé en ce qu'**au moins une plage de déviation (56b, 56c) comprend au moins deux plages partielles (60b, 60c, 61 b, 61 c), et **en ce que** la déviation de l'élément d'actionnement (21 ; 221 ; 321 ; 421) dans différentes plages partielles (60b, 61 b, 60c, 61c) de ladite au moins une plage de déviation (56b, 56c) est affectée à différentes fonctions de commande du dispositif de commande.

16. Appareil de commande (1 ; 101 ; 201 ; 301 ; 401) selon la revendication 15 en tenant compte des revendications 14 et 2,
**caractérisé en ce que** la première plage de déviation (56b, 56c) comprend pour les deux directions respectivement une première plage partielle (60b, 60c) située plus près de la position neutre et une deuxième plage partielle (61 b, 61 c) adjacente à la première plage partielle (60b, 60c),
et **en ce que** dans la première plage partielle (60b, 60c) de la première plage de déviation (56b, 56c), pour les deux directions de déviation, chaque déviation de l'élément d'actionnement (21 ; 121 ; 221 ; 321 ; 421) est affectée à un maintien du dispositif de basculement dans la position actuelle,
**en ce que** dans la deuxième plage partielle (61b, 61c) de la première plage de déviation, la déviation de l'élément d'actionnement (21 ; 121 ; 221 ; 321 ; 421) pour une première direction de déviation est affectée à une vitesse, augmentant au fur et à mesure de la déviation, d'un basculement du dispositif de basculement d'une position de sortie à une position de fin
et pour la deuxième direction de déviation opposée à la première direction de déviation, elle est affectée à une vitesse, augmentant au fur et à mesure de la déviation, d'un basculement du dispositif de basculement d'une position de fin à une position de sortie,
et **en ce que** chaque déviation dans la deuxième plage de déviation (58b, 58c) pour la première direction de déviation est affectée à une fonction spéciale de position de fin, en particulier à un basculement à commande automatique du dispositif de basculement vers la position de fin, et pour la deuxième direction de déviation, elle est affectée à une fonction spéciale de position de sortie, en particulier à un basculement à commande automatique du dispositif de basculement dans la position de sortie.

17. Appareil de commande (1 ; 101 ; 201 ; 301 ; 401) selon l'une quelconque des revendications précédentes,
**caractérisé en ce que** l'équipement de signalisation comprend un émetteur radio pour retransmettre le signal de capteur ou un signal de sortie dérivé de celui-ci à un dispositif de commande externe pour commander le dispositif de basculement du véhicule à benne basculante.

18. Appareil de commande (1 ; 101 ; 201 ; 301 ; 401) selon l'une quelconque des revendications précédentes, **caractérisé en ce qu'**il comprend un équipement de conversion, de préférence un équipement à microprocesseur, pour convertir le signal de capteur en un signal de sortie dérivé de celui-ci,
dans lequel la dérivation du signal de sortie du signal de capteur est effectuée pour différentes plages de déviation (56b, 58b, 56c, 58c) ou/et pour différentes plages partielles (60b, 61 b, 60c, 61 c) d'une plage de déviation (56b, 56c) par différentes règles d'affectation spécifiées.

19. Appareil de commande (1 ; 101 ; 201 ; 301 ; 401) selon l'une quelconque des revendications précédentes,
**caractérisé en ce qu'**il comprend au moins un présélecteur (13a, 113a, 213a) qui permet de sélectionner au moins deux fonctions de présélection, dans lequel la déviation de l'élément d'actionnement (21 ; 121 ; 221 ; 321 ; 421) dans une plage de déviation (56b, 56c, 58b, 58c) est affectée à différentes fonctions de commande lorsque différentes fonctions de présélection sont sélectionnées.

20. Appareil de commande (1 ; 101 ; 301 ; 401) selon l'une quelconque des revendications précédentes,
**caractérisé en ce qu'**il comprend un affichage (19 ; 119) sur lequel, en cours d'utilisation, s'affiche à tout moment la déviation de l'élément d'actionnement (21 ; 121 ; 321 ; 421) ou/et le signal de capteur ou/et le signal de sortie ou/et la plage de déviation (56b, 56c, 58b, 58c) ou/et la plage partielle (60b, 61b, 60c, 61c) d'une plage de déviation (56b, 56c) dans laquelle se trouve l'élément d'actionnement (21 ; 121 ; 321 ; 421) ou/et une fonction de présélection sélectionnée.

21. Véhicule à benne basculante avec un dispositif de basculement, un dispositif de commande pour commander le dispositif de basculement et un appareil de commande (1 ; 101 ; 201 ; 301 ; 401) pour le dispositif de commande selon l'une quelconque des revendications précédentes.
